# EUROPEAN PATENT SPECIFICATION

(11) **EP 0 306 208 B1**
(45) Date of publication and mention of the grant of the patent: **09.08.1995**
(21) Application number: 88307849.5
(22) Date of filing: 24.08.1988
(51) Int. Cl.: H04N 7/087

(54) **Method and apparatus for the transmission and/or reception of computer programs and/or data by way of teletext**
Verfahren und Gerät zum Übertragen und/oder Empfangen von Rechnerprogrammen und/oder Daten mittels Teletext
Méthode et appareil pour la transmission et/ou la réception de programmes d'ordinateur et/ou données au moyen de télétexte

(30) Priority: 02.09.1987 IT 6774687
(43) Date of publication of application: 08.03.1989
(73) Proprietor: Ing. C. Olivetti & C., S.p.A., 10015 Ivrea (IT); RAI RADIOTELEVISIONE ITALIANA, 00195 Roma (IT)
(72) Inventor: Cester, Mario, I-100100 Lessolo (TO) (IT); D'Amato, Paolo, I-100141 Torino (IT)
(74) Representative: Abnett, Richard Charles

(56) References cited:
- EP-A- 0 176 099
- FR-A- 2 509 553
- US-A- 4 054 911
- IEEE TRANSACTIONS ON CONSUMER ELECTRONICS, vol. CE-25, no. 3, 3rd July 1979, pages 279-287; J. HEDGER: "Telesoftware: home computing via broadcast teletext"
- WIRELESS WORLD, vol. 84, no. 1515, November 1978, pages 61-64; J. HEDGER: "Telesoftware, home computing via teletext"
- INTERNATIONAL BROADCASTING CONVENTION IBC'84, Brighton, 21st-25th September 1984, pages 323-326; D.J. RAVERS: "Telesoftware by teletext"
- 1987 IEEE INTERNATIONAL CONFERENCE ON CONSUMER ELECTRONICS, DIGEST OF TECHNICAL PAPERS, Rosemont, 2nd-5th June 1987, pages 60-61; A. GUENOT: "Data reception using a mulistandard acquisition IC"
- EBU REVIEW TECHNICAL, no. 222, April 1987, pages 80-89, Brussels, BE; J.P. CHAMBERS: "BBC Datacast"
- HNK LABORATORIES NOTE, no. 346, May 1987, pages 1,3-13, Tokyo, JP; O. YAMADA et al.: "An error-correcting LSI for data broadcasting and its error-correction capability"

## Description

The present invention relates to a method for transmitting or receiving through the air "telesoftware" files containing programs and/or data, in a teletext environment, and to transmission and receiving apparatus for use in such a method.

A transmission method of the type is known from International Broadcasting Convention IBC ′84, Brighton, 21st-25th September 1984, IEE Conference Publication No. 240 pages 323 - 326. In that method the files containing the programs and the data are transmitted with the same procedure as that used for the teletext pages. The data and/or software programs in that method co-exist with the teletext pages which can be displayed on the screen of a television receiver equipped with suitable decoding cirucits. The programs are sent in pages of a predetermined range of page numbers, distinct from those used for teletext, and control characters required to enable the receiver to interpret the programs are embedded within the programs themselves at the transmitter prior to transmission. On receiving the transmitted signal the receiver looks up and interprets every incoming byte in one of two tables to identify it either as a program/data entry or a command signal and acts accordingly using predefined routines stored at the receiver. The transmission protocol is predetermined by these predefined routines and so only limited protocol flexibility is available. This method has the disadvantage that it is not possible to change the manner of transmitting given programs or data beyond these predefined options. Such a feature could however be useful to comply with particular needs of the programs and/or to overcome difficulties in broadcast transmissions which involve particularly hilly geographical regions which adversely affect the correctness of the transmissions. The known prior method also has the disadvantage that continuous byte-by-byte interpretation of the incoming datastream is required, undesirably raising the necessary processing capability of the receiver.

The technical problem on which the present invention is based is that of providing a method and an apparatus for the transmission/reception through the air of files with data and/or programs, in a teletext environment, which is quick, which permits a high degree of flexibility both in organisation and in the capacity of the files, and which does not disturb reception of normal television programmes.

This problem is solved by the method of and apparatus for transmission or reception of computer programs, according to the characterising parts of the appendant independent claims. Advantageous features of the invention are set forth in dependent subclaims.

The various aspects and features of the invention will be apparent from the following description which is given by way of non-limiting example with reference to the accompanying drawings in which:
Figure 1 is a general block diagram of the transmission and/or reception system according to the invention,
Figure 2 is a block diagram of a reception apparatus according to the invention, with a variant for a block of the diagram shown in Figure 1,
Figure 3 is another reception apparatus with another variant for a block shown in Figure 2,
Figure 4 is an operating diagram of the system according to the invention,
Figures 5a, 5b and 5c diagrammatically show different modes of operating the apparatus shown in Figure 3,
Figure 6 shows a further mode of operating the apparatus of Figure 3,
Figure 7 is a block diagram of some items of information contained in the detail in Figure 6,
Figure 8 is an operative diagram of a data conversion mode of the system according to the invention,
Figure 9 is a data conversion table of the Figure 1 system,
Figures 10, 11 and 12 are block diagrams of some items of information which can be stored in a memory in Figure 3,
Figures 13, 14 and 15 are circuit diagrams of parts of the apparatus shown in Figure 3,
Figures 16 and 17 are block diagrams of further items of information which can be stored in a memory in Figure 3,
Figure 18 is a flow chart of the mode of operation of the system according to the invention, and
Figure 19 is another flow chart of the mode of operation of the system according to the invention.

### GENERAL ASPECTS OF TELETEXT TRANSMISSIONS

As is known, teletext transmissions involve a system for transmission through the air of information for the user, which appears on the television screen in the form of "pages" containing a written text and simple graphics. For that purpose, the system uses the frame blanking interval of the video signal for transmitting blocks of items of digital information which co-exist with the normal television programme, without reciprocal interference.

The teletext pages are only transmitted cyclically. They can be selectively extracted from the video signal in response to a page selection command on the part of the user and stored in a memory to facilitate display thereof. Naturally the page acquisition time is variable in accordance with the frequency with which the page is transmitted with respect to the other pages in a complete transmission cycle.

Teletext pages consist of 20 lines of 40 characters. The characters may be alphanumeric, graphic or check characters. The latter define the display attributes (colour of the character and the background, size of the character, character flash etc). All the characters consist of 8 bits of which one is a parity bit. The system used is based on a structure which is "synchronous" with the television signal, in the sense that each line of characters displayed on the screen is transmitted in a television line.

That system has been adopted by RAI for the "TELEVIDEO" service which was opened to the public from 1st September 1984, in accordance with the Ministerial Decrees of 3rd and 4th August 1984, to which reference is made for further details.

The teletext system is not limited to the transmission of digital signals which co-exist with the analog signals of the television programmes, but can also be applied to transmissions in which the television carrier channel is exclusively dedicated to data transmission.

For the above-mentioned reasons, in the TELEVIDEO service, service information for the teletext decodere are also included in the 24 lines, from line 0 to line 23 of each teletext page.

The teletext "pages" are numbered in groups of 100, referred to as "magazines", for a maximum of 8. Not all the pages of a magazine are necessarily transmitted. Each page is numbered with three address digits (numerals) of which the first digit identifies the magazine to which the page belongs to and the other two digits identify the page number in the magazine. In addition, each page may have associated therewith sub-pages or sides identified by a sub-code of another four digits. For example the digits "637 0003" identify sub-page 0003 of page 37, belonging to magazine 6. The assembly of sides with the same address define a teletext "chapter".

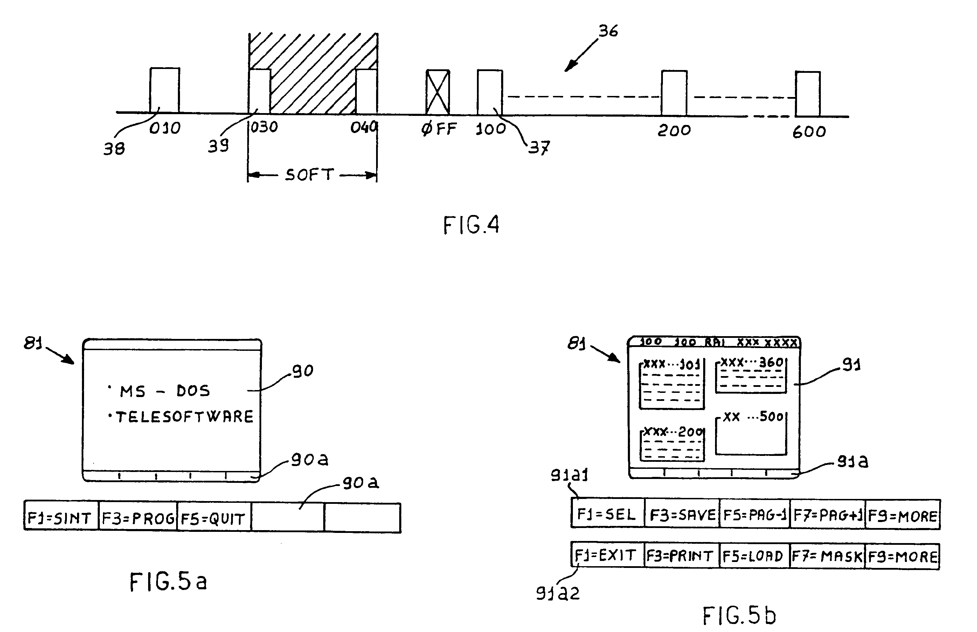

Page 100, which is indicated at 91 in Figure 5b, contains a general index and is transmitted at a higher rate than that of the other pages to give the user the option of access thereto more quickly.

The page identification number which is generally displayed in a clear mode on the first line of the television screen is sent in binary form; from hexadecimal 00 to FF (from 0 to 255 decimal) of which the TELEVIDEO system at the present time uses only decimal numbers up to 99.

The sub-code indication is also sent in binary form, in which:
a) two bits indicate the most significant digit;
b) four bits indicate the subsequent digit;
c) three bits indicate the subsequent digit; and
d) four bits indicate the least significant digit.

At the present time the TELEVIDEO service from RAI uses binary numbers in the range of 0-9 for an availability of sub-code decimal numbers from 0000 to 3979.

As is known, some pages in the "magazine" may be up-dated with various contents in each transmission cycle and in accordance with the sub-page number which identifies the sequence. Those pages are the "rolling pages" which make it possible to transmit a large amount of information using a single page address. For example, if page 177 is to be used to send 3 rolling pages, they will be formed by 177 0001; 177 0002; and 177 0003.

Each teletext line consists of 45 bytes of which the first 5 bytes are service bytes and contain information in respect of synchronism, magazine number and line address in the range of from 0 to 31 while the remaining 40 bytes contain code information for the teletext line.

Line "0̸" (zero) is the first line of any teletext page. Provided in that line "0̸", besides the first 5 service bytes, are 8 other bytes which are used to identify the page and to carry check information. There then follow 32 bytes of which the last 8 bytes are used to define the time. The service bytes subsequent to the 5th bear the following meanings:
a) bytes 6 and 7 provide the number of the page, units and tens respectively;
b) bytes 8 to 11 provide the sub-code; and
c) bytes 12 and 13 provide a series of check bits containing information for the decoding circuits regarding the page and display of the related data.

The remaining 32 bytes of the line "0̸" are characters which, after decoding in a teletext environment, are displayed on the first line of the screen. When the decoder recognizes the beginning of the line "0̸" of a fresh page, it also recognizes in the preceding line received, the last line of the preceding page. In that way each line "0̸" determines the end of a page and the beginning of the following page. The lines transmitted between two lines "0̸" may in turn be sent in any order (for example line 1, line 10, line 6, etc.) insofar as each line has at its head the items of information necessary to be identified. If the decoding circuit detects the end of the page by virtue of the line "0̸" of the subsequent page, it assumes that the lines which have not been received of the preceding page are empty lines.

The items of information received in relation to line 1 to 23 are displayed as lines of the text which appears on the television screen. For those lines also, the first three bytes (clock run-in, 2 bytes; and framing code, 1 byte) are used by the decoder for line synchronisation; another two bytes identify the magazine number (3 useful bits) and the line number (5 useful bits). The remaining bits provide the information for finding and correcting errors in accordance with the hamming code 8/4. The remaining 40 bytes are the teletext data corresponding to that which is displayed on the television screen.

### GENERAL ASPECT OF TELESOFTWARE

The telesoftware service constitutes an extension of the functions of the TELEVIDEO service and permits the reception of "files" which contain both "software" (computer programs) and data.

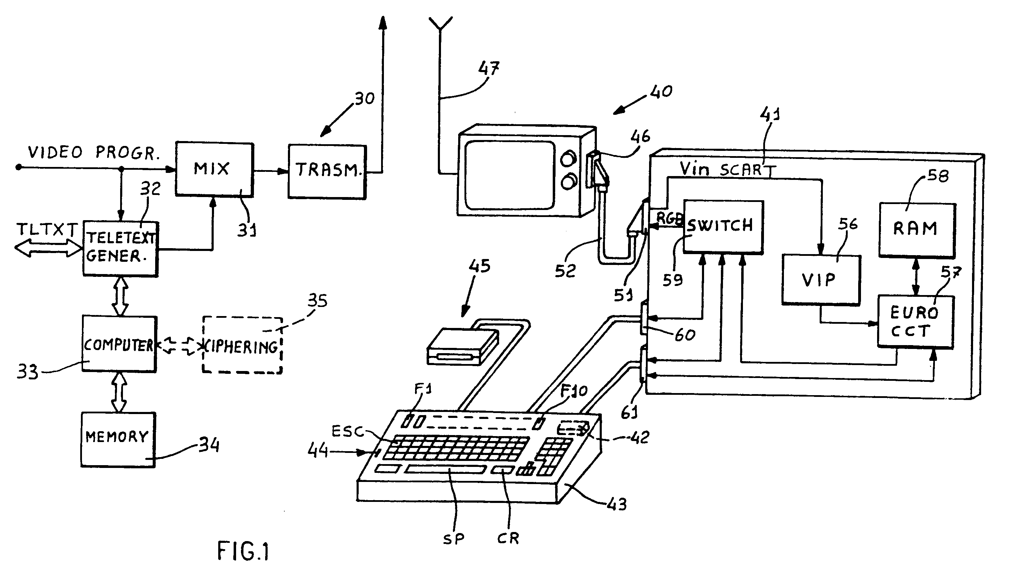

With reference to Figure 1, the system for transmission of the telesoftware files provides a television transmitter 30 of known type which is normally used for broadcasting television programmes and the description of which is outside the subject-matter of the present invention. The video signal passing into such a television transmitter comes from a mixer circuit 31 which receives as its input the programme video signal VIDEO PROGR. and a teletext signal coming from a teletext generation system 32.

The teletext generation system receives at its input the programme video signal VIDEO PROGR. (for synchronisation reasons) and produces the teletext data on the basis of information TLTXT coming from external terminals or remote data banks. Such a generation system, in the present invention, is also connected to a telesoftware generation system formed by a computer 33. The computer 33 checks the coding of the data of the telesoftware files which are taken from a memory 34 and provides for insertion of the coded telesoftware data between the teletext data of the system 32, possibly after a ciphering operation by means of a ciphering circuit 35.

The telesoftware in general constitutes a sub-assembly of the teletext in the sense that, in a teletext service comprising the transmission of an assembly of pages 36 (Figure 4) and in which two pages 37 and 38 which can be displayed on the screen include the index of the teletext pages and the index of the telesoftware programs, the pages 39 which are shown in broken lines are however dedicated to the transmission of files SOFT of programs and/or data.

If the pages 39 containing the telesoftware are called up by a user equipped with a normal teletext receiver fitted into the television apparatus, the pages which are called up, from the first line which remains readable, are displayed as an assembly of alphanumeric of semi-graphic characters which are not intelligible in their whole or they are not displayed, in accordance with the specific checks of the receiving apparatus.

The use of the program and/or data files of the telesoftware service requires a reception unit 40 (see Figure 1) which is predisposed for receiving the television channel on which the teletext service is transmitted, a decoding unit 41, an interface circuit 42 and a computer 43 which, by means of its keyboard 44 and a control program, controls the unit 41 and provides for loading of the items of information received into its internal memory or into an external memory 45.

In the embodiment shown in Figure 1 the reception unit 40 is a television receiver of commercial type which is provided with a peritelevision plug (SCART) 46 which is known per se and is connected to an aerial 47. The receiver 40 is used for tuning in the television channel bearing the teletext service with the desired telesoftware. The decoding unit 41 is also provided with a peritelevision plug 51 which is connected by way of a "hybrid" cable 52 to the plug 46 of the receiver 40.

The decoding unit 41 uses the demodulated video signal Vin-SCART coming from the receiver 40 for decoding the corresponding teletext signals and feeds the screen of the receiver 40 by means of the signals RGB generated by the unit 41 under the control of the computer 43.

The decoding unit 41 comprises a video signal processor circuit (VIP) 56, a teletext signal control microprocessor (EURO-CCT) 57 and a random access memory (RAM) 58. Those circuits are of standardised type for decoding teletext signals and are widely available on the market. In particular the VIP circuit 56 is for example of the type SAA 5230 and is capable of extracting from the signal Vin the serial teletext information present in the frame flyback. The circuit EURO-CCT 57 is for example of the type SAA 5240 and is suitable for acquisition in parallel mode of the teletext data received and for storage thereof in suitable locations in the RAM 58; it further comprises a character generator controlled by the teletext signals and provides for generating the corresponding signals RGB.

The decoding unit 41 also comprises a switching circuit 59 for the signals RGB, which is connected to suitable contacts of the SCART plug 51 and is also connected to the computer 43 by way of a video connector 60. The computer 43, by way of the interface circuit 42 and a connector 61 of the unit 41, provides for exchange of data with the EURO-CCT circuit 57 and for controlling by way of the connector 60 the switching circuit 59 for displaying at the receiver 40 alternatively either the characters generated by the EURO-CCT circuit 57 or the characters generated by the computer 43.

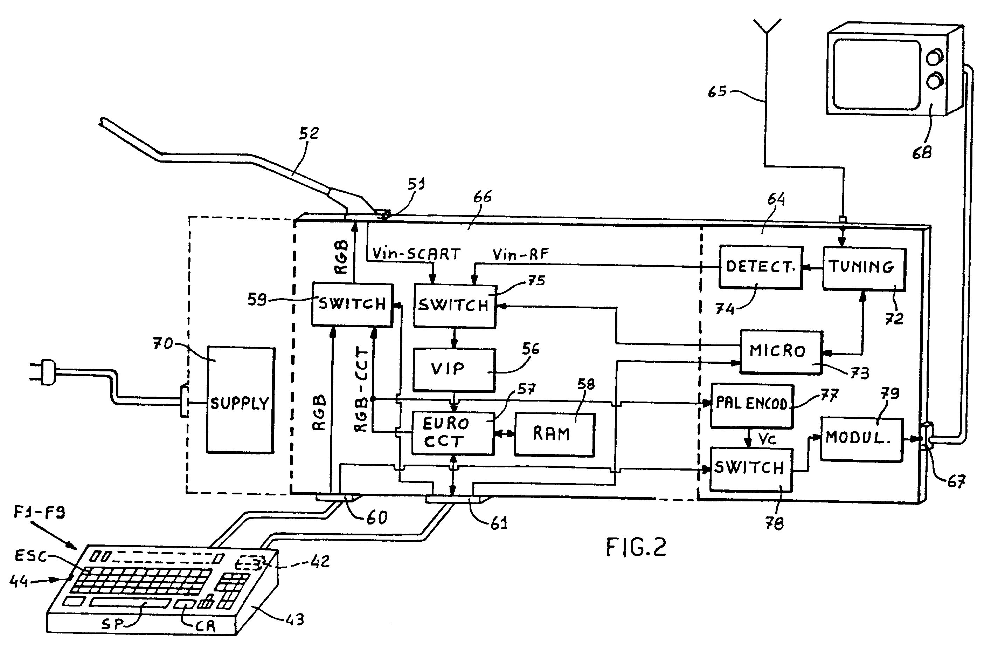

In the alternative construction shown in Figure 2 the receiving portion comprises a tuning and decoding unit 64 which receives the television signals from an aerial 65 (which may also be the aerial 47). The unit 64 is connected to various circuits of a decoding unit 66 substantially the same as the decoding unit 41 and by way of the unit 66 is connected to the computer 43. The tuning unit 64 is also operable to generate at a plug RF 67 a television signal on a predetermined carrier channel, to be used on a television receiver 68 without a SCART plug and which is used only for display purposes. A power supply unit 70 also provides for the power supply to all the circuits of the decoding unit 66 and the tuning unit 64, independently of the computer 43 or the television receiver 68.

The tuning unit 64 is similar to a television receiver but is without the audio section, the screen and the associated controls. In particular the unit 64 comprises a tuning circuit 72 which is connected to the aerial 65 and controlled by a microprocessor 73 for reception of the desired television channel. The associated video output signal Vin-RF of medium frequency, is detected by a detector circuit 74 and supplied to a switching circuit 75 of the unit 66, which in turn is controlled by the microprocessor 73. The switching circuit 75 is also connected to the SCART plug 51 for receiving alternately with the signal Vin-RF the signal Vin-SCART in the situation where the decoding unit 66 is connected to the SCART plug 46 of the television 40 in Figure 1. The microprocessor 73 is connected to the computer 43 by way of the connector 61 of the unit 66 and the functions thereof for channel tuning and activation of the circuit 75 can be directly controlled by the keyboard 44 of the computer 43 and the associated control program.

The unit 64 also comprises a PAL encoder 77 which is supplied with the signals RGB-CCT of the circuit EURO-CCT 57 of the unit 66 to provide a composite video signal Vc. By way of a switching means 78 and a modulator 79 the signal Vc supplies at the plug RF 67 the television signal for the receiver 68. The circuit 78 is also controlled by the computer 43 by way of the connector 60. When the receiver 68 has been tuned to the television channel generated by the unit 64, the computer 43 can display on the screen of the receiver 68 either the characters generated by the circuit 57 of those generated by the computer 43.

After tuning of the desired channel which is effected directly at the receiver 40 in Figure 1 or by means of the computer 43 at the unit 64 in Figure 2, the user may call by means of the keyboard 44 of the computer 43 for storage of programs and/or telesoftware data by way of the interface circuit 42. The decoding unit 40, 66 firstly stores the data in the memory 58 and then from same extracts the telesoftware data in accordance with the telesoftware control and loading program which is in the computer 43.

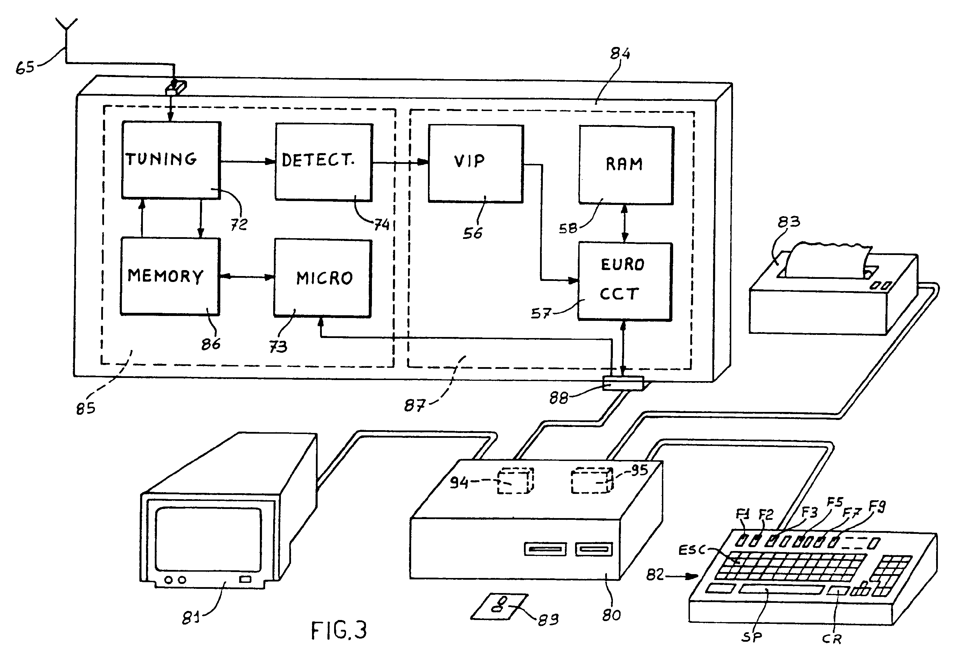

The computer 43 may be of the type known as a "home computer" (HC), which for example has no video display and which is substantially as described, or of the type known as a "personal computer" (PC) as indicated at 80 (see Figure 3), typically provided with its own 25 line display 81 and a separate keyboard 82 and optionally connected to a printer 83.

In the case of the PC 80, loading of telesoftware programs provides for use of a tuning and decoding unit 84 provided with a tuning unit 85 similar to the tuning unit 64 in Figure 2. The unit 85 in particular comprises the tuning circuit 72, the control microprocessor 73, the medium frequency detection circuit 74 for the video signal Vin and a memory 86 for storing the tuning information relating to a predetermined number (for example 30) of television channels, in per se known manner. The tuning and decoding unit 84 also comprises a decoding unit 87 similar to the unit 41 in Figure 1 comprising the video signal processing circuit VIP 56, the EURO-CCT circuit 57 and the RAM 58. The unit 84 is connected to the PC 80 by means of a connector 88. The PC 80 also provides for the supply of power to the unit 84 by way of the connector 88.

The PC 80 is predisposed for processing the teletext and telesoftware information by means of a board EPROM 94 for generating TELEVIDEO characters, which is used in place of the standard character generation board, and an interface board 95 for interfacing with the unit 84, to be used on an expansion slot in the PC 80. The control program for loading the software is included in an external carrier, for example a magnetic disk 89. The telesoftware control program specializes the function keys F1-F9 and other keys of the keyboard 44 and 82 of the computers 43 and 80 respectively for the "environment" created by the program.

With specific reference to the PC 80 (see Figure 3), acquisition of the telesoftware control program causes the display 81 to display a menu 90 (Figure 5a) relating to the choice of a "MS-DOS" program which is known per se of the computer 80 or "TELESOFTWARE" which is common both to the televideo environment and to the telesoftware environment. The last character line 90a of the display 81 (line 25) in turn provides indications of specialization in respect of the function keys F1, F3 and F5.

The indication F1 = TUNE indicates that sequential operation of the key F1 and a group of numeric keys of the keyboard 82 acts on the tuning circuit 72 and on the memory 86 of the unit 84 (see Figure 3) for storing the associated tuning data, associating same with a corresponding index number. The indication F3 = PROG specifies that actuation of the F3 followed by actuation of two numeric keys representative of the index number makes it possible to select the desired channel by means of the data in the memory 86. The indication F5 = QUIT specifies that actuation of F5, confirmed by actuation of the key CR (carriage return) causes the PC 80 to return to the MS-DOS system.

After selection of the desired channel the PC 80, in the televideo mode, causes the display 81 to display the typical menu 91 (Figure 5b) of that mode, that is to say the page index 37 of the teletext pages 36 (progressive to 100) in which the index of the televideo pages is present, just as would appear in a commercial television set provided with televideo decoding circuits. In that case also the first line (line 0̸) of the display 81 carries the indications in respect of the page (100), the transmitting station (RAI), the day and the time. In addition the last character line 91a of the display 81 has five fields which, in an initial order 91a1, provide the following indications: F1 = SEL; F3 = SAVE; F5 = PAG - 1; F7 = PAG + 1; and F9 = MORE. Those indications are representative of a new specialization of the function keys F1 - F9. Actuation of F1 followed by the input of three decimal digits, actuation of a separator key, possibly the input of another three decimal digits, and confirmation by actuation of the key CR, causes storage of and call for a page 36 (Figure 4) of teletext and possibly its sub-page, as selected.

The actuation of F3 followed by an alphabetic key indicative of a memory and a series of characters and confirmed by actuation of the key CR causes storage in the memory specified by the alphabet key of the content of the page selected and shown on the display 81. F5 and F7 respectively select the respectively subsequent and preceding pages, relative to the selected page. Finally actuation of F9 causes a change in the order from 91a1 to 91a2 (see Figure 5b) in which the five fields of the character line 91a provide the following indications:
F1 = EXIT; F3 = PRINT; F5 = LOAD; F7 = MASK; and F9 = MORE.

In the order 91a2, actuation of F1 causes return to the menu 90. Actuation of F3 followed by actuation of the key CR causes printing of the page displayed, by means of the printer 83. Actuation of F5 followed by a letter and a series of characters and confirmed by actuation of the key CR in turn causes display of any page of teletext which had been previously stored with the key F3 (SAVE). Actuation of F7 will mask a part of the area displayed, for example to conceal a telequiz solution; and finally actuation of F9 will return the PC80 to the previous order 91a1.

In the event of errors in actuation of the keys, the reason for the error will be displayed on the display 81 (Figure 3) and correction of the error is possible after actuation of the spacer bar SP of the keyboard 82 which returns the PC 80 to the status immediately preceding that in which the error had occurred.

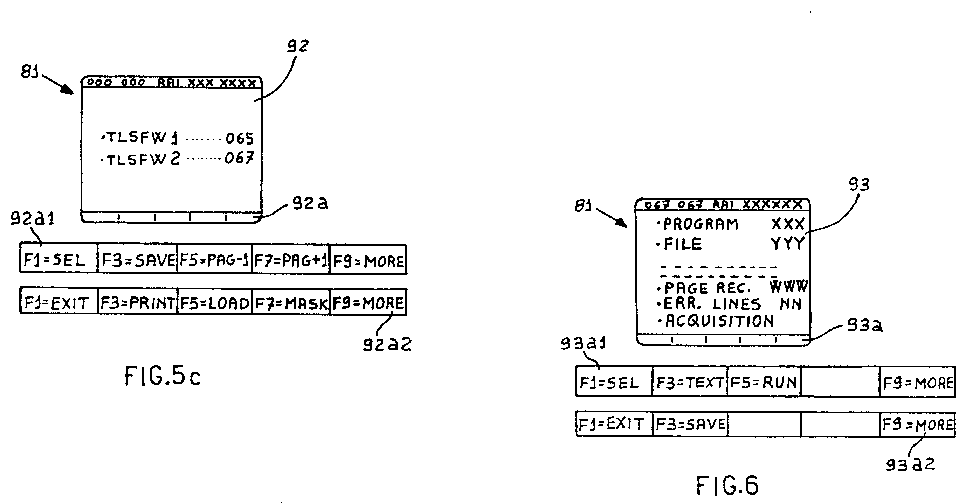

In the televideo mode, selection of the page index 38 of the telesoftware programs (Figure 4) will cause the display 80 to display a menu 92 (Figure 5c) of the available telesoftware programs, with the appropriate indication of the first teletext page in which the various telesoftware programs begin. The last line 92a of the display 81 also maintains the same indications in respect of the line 91a as specified in the orders 91a1 and 91a2.

As will be described hereinafter, selection of one of the telesoftware pages indicated in the menu 92 causes automatic adaptation of the PC 80 to the specific telesoftware mode and causes the display 81 to display the indications 93 (Figure 6) in which the first line has the same items of information of a teletext page and the last line 93 in an initial order 93a1, bears the following items:
F1 = SEL; F3 = TEXT; F5 = RUN; and F9 = MORE.

Actuation of F1 followed by the number of the page will select the desired telesoftware program.

The other lines on the display 81 will then supply the following items which will be automatically extracted by the PC 80 from the telesoftware program being received:
- PROGRAM, together with the number of the pages and the index;
- FILE TYPE, with specification of the type, which may be indicative of the language used such as BASIC or COMPILED (or EXECUTABLE, which is already written in machine code and which can be executed under the MS-DOS operating system), or indicative of the nature of the program such as TEXT or DATA, as will be described hereinafter;
- FILE NAME, together with the name of the file;
- FILE LENGTH, with specification of the length of the file, in hexadecimal code;
- PAGES RECEIVED, together with the number of pages received, in hexadecimal code;
- INCORRECT LINES, together with the number of incorrect lines received.
   The incorrect lines will be automatically corrected by the PC 80 or replaced by other lines which are received at subsequent times, as will be described hereinafter. That number will be useful for determining the quality of the reception channel. When reception is concluded, the number of wrong lines will be automatically zeroed; and finally
- AQUISITION IN PROGRESS, which will remain displayed until the program has been completely acquired by the PC 80.

Actuation of F3 causes return of the PC 80 to the televideo mode. Alternatively return to the last televideo page is also activated by actuation of the key ESC (escape).

Actuation of the key F5 causes execution of the acquired program.

Actuation of the key F9 switches the PC 80 between the order 93a1 and an order 93a2 in which the last line 93a bears the following indications:
F1 = EXIT; F3 = SAVE; and F9 = MORE, and in which actuation of F1 makes it possible to return to the menu 90 in Figure 5a. Actuation of F3 makes it possible to store the telesoftware received in a mass memory of the PC 80 with the procedures already indicated in relation to storage of a teletext page. Finally actuation of F9 switches the PC 80 to the order 93a1.

In each case, when reception is concluded, the user will have available on the computer HC 53 or the PC 90 a file of programs and/or data as if it had been loaded from any mass carrier directly connected to the computer.

Transmission of the files takes place by using a communication protocol for setting up and maintaining the communication and which permits adequate protection for the information of the file in regard to transmission errors.

In the embodiment of the telesoftware transmission system according to the invention, no variation in the present teletext standard has been introduced. In particular the system has kept the same transmission unit (the line) and the same structure at the page side level as the teletext service. On that basis, it has been possible to use a good part of the apparatuses and circuits which are already in use both for the transmission and for the reception of the teletext service.

### GLOSSARY

Set out below are the definitions of some terms which are repeatedly used in the course of the description.

"Block" is an assembly of data zones of a chapter which belong to a file and which are arranged in contiguous sides.

"Byte" is a unit of area of memory, always formed by 8 bits.

"Chapter" is the assembly of all the sides characterised by the same page number.

"Character" is an elementary assembly formed by 8 bits. It contains from 6 to 8 useful bits of information.

"Side" is a teletext page which always has the same information content.

"Telesoftware side" is a teletext page used for the transmission of telesoftware data.

"File" is an assembly of data or programs relating to a given topic.

"Group" is an assembly of contiguous pages which is dedicated to the telesoftware transmission.

"File heading" is a structure of data containing an assembly of information which permit control of another assembly of data which is associated therewith.

"Side heading" is a structure of data arranged in each telesoftware side and containing information relating to the content thereof.

"Program" is the assembly of data containing the items of information which permit the processor to carry out a logic sequence of elementary operations.

"Protocol" is the assembly of rules and conventions which make it possible to set up and maintain a communication.

"Data segment" is an assembly of data which are located in contiguous memory positions.

"Data zone" is an assembly of the characters of a telesoftware side containing the data relating to a single file.

### DIFFERENCES BETWEEN TELETEXT AND TELESOFTWARE

In order to be able to maintain a page structure which does not depend on the number of the line, the line 0̸ has not been used in the telesoftware system. All the telesoftware information has therefore been put into lines 1 to 23.

In accordance with the invention, differentiation as between the teletext system and the telesoftware system has been entrusted to some items of information which are included in each individual page side. In contrast to the information contained in a teletext side, which information can be displayed directly, the items of information of a side for telesoftware comprise the following:
a) data relating to management of reception;
b) data which constitute part of the file to be received; and
c) data for checking the data of point b).

The telesoftware information contained in the side is not used directly but requires a series of preparations. The way chosen for distinguishing the telesoftware chapters from the teletext pages has been that of notifying the receiving computer which they are. In addition, to ensure a high level of flexibility of operation, there has been created a dynamic configuration for the receiving apparatus in dependence on the conditions of operation, defining in contrast a single fixed chapter, for the configuration of the protocol, as will be described hereinafter.

### SUBDIVISION OF THE LEVELS OF THE PROTOCOL

In order to separate the various problems whether of system or communication type, in accordance with the invention, the protocol has been divided into "levels" for a hierarchical solution to the problems of encoding/decoding data. More precisely there are eight "levels" which are examined from the point of view of the receiving system.

Level 8 (access check). This is dedicated to checking the access of the data of the file transmitted and permits selective reception of the files, or it enables for reception in the clear mode only the computers which have in their memory the deciphering access key for the ciphered files. This level 8 may be used with any of the known ciphering/deciphering systems and is not described in detail herein.

Level 7: coding of the file and link (connections) between the chapters. This refers to that part of the protocol which joins the assemblies of data received and controls the automatic search for fresh chapters for complete reception of the file.

Level 6: side coding. This refers to that assembly of rules for constructing a side of a file.

Level 5: transcoding of character. This is dedicated to the passage from transmission coding to a specific 8 bit coding.

Level 4: detection/correction of errors. This is dedicated to handling the code, in such a way as to introduce verification of correctness and possible self-correction of the digital data received.

Level 3: masking. This refers to a level which provides for "masking" of the data in such a way as to compensate for the effects due to the critical sequences of data.

Level 2: teletext coding. This refers to that part of the system which relates to decoding of teletext data.

Level 1: physical level. This refers to the apparatuses which provide for reception of the video signal and extraction of digital data from the broadcast signals.

In accordance with the invention the features of operation of the levels from three to eight as set forth above are defined by a series of parameters which are combined together and transmitted in a fixed chapter and with fixed coding, as will be described in greater detail hereinafter. In that way it is also possible to transmit decoding programs which ex-novo reconstruct the various levels, with a high degree of flexibility in relation to more sophisticated transmission and/or reception systems, without the users who operate with the first telesoftware version still having to be penalised by subsequent developments.

At the time of commencement, the receiving system will search for and read automatically the Configuration Chapter and is predisposed in accordance with the specification of the parameters of the protocol which are read. After that aquisition operation the receiving system is then ready to receive the transmitted files.

In general each item of data within the protocol is interpreted as a "byte", that is to say it has 8 bits which are all significant. For the lower levels (1, 2, 3 and 4) however there may be characters with an information content of 6, 7 or 8 bits which are expressly specified from time to time.

The addresses of data contained in a page side are always calculated on the data which are to be found between levels 5 and 6 or after transcoding and before decoding of a side. In addition the first byte of the side is considered as byte 0̸. The size of an assembly of bytes is expressed in a similar fashion.

### CONFIGURATION CHAPTER OF THE PROTOCOL

The Configuration Chapter is the only chapter of the telesoftware system which has a fixed coding and structure. The items of information contained in the configuration chapter concern the following:
1) The presence of a telesoftware service on the channel when the Configuration Chapter is transmitted;
2) The specification of the teletext chapters which are dedicated to the telesoftware transmission; and
3) The specification of auxiliary items of information intended for reception of the files.

In accordance with a preferential choice which is compatible with the present TELEVIDEO service, the Configuration Chapter of the protocol which has been selected is the TELEVIDEO chapter whose hexadecimal code is "0̸FF". That relates to a chapter which is not used by the Televideo service; other choices are obviously possible but they are made once and for all insofar as the configuration chapter is searched for and identified automatically by the actual receiving computer on the basis of the address thereof.

### Data coding of the Configuration Chapter

The configuration chapter "0̸FF" may be subjected to two different types of coding:
1) Coding of type A which can be used for telesoftware transmissions where it is possible to use 8 bit transcoding;
2) Coding of type B, with 3/4 transcoding, which can be used for the telesoftware systems where 8 bit transcoding cannot be used.

To provide that the receiving computer knows a priori the precise coding of the configuration chapter, the lines 0̸ of the sides which constitute the chapter "0̸FF" provide in their bytes 8 to 11 a "sub-code" associated with the type of transmission of the page "0̸FF". The receiving system distinguishes the codes of the chapter "0̸FF" on the basis of the sub-code of the side received. When the value of the sub-code is between 0̸ and 0̸F7F, the coding is of type A; when the value of the sub-code is greater than or equal to 1000, in hexadecimal, the coding is of type B. Apart from the adjustment of transcoding to the sub-code received, the receiving unit is also predisposed to receive coding in respect of the side data of hamming type (40, 34) for transmission which is effected up to 23 lines per side, from lines 1 to 23, for a total of 920 characters/side.

When the predisposition operations are carried out, the chapter 0̸FF may be formed by a plurality of sides. Each side may contain up to 736 valid bytes for coding of type A and up to 552 valid bytes for coding of type B.

In any case any extension is possible, by using other configuration chapters and other rules in different pages of the transmission. By maintaining compatability with the first version of the protocol, the only result will then be that the fresh chapters will be ignored by the preceding versions.

### Configuration of the protocol

The structure of the sides of the chapter "0̸FF" is different from that of the sides of the files of data and programs.

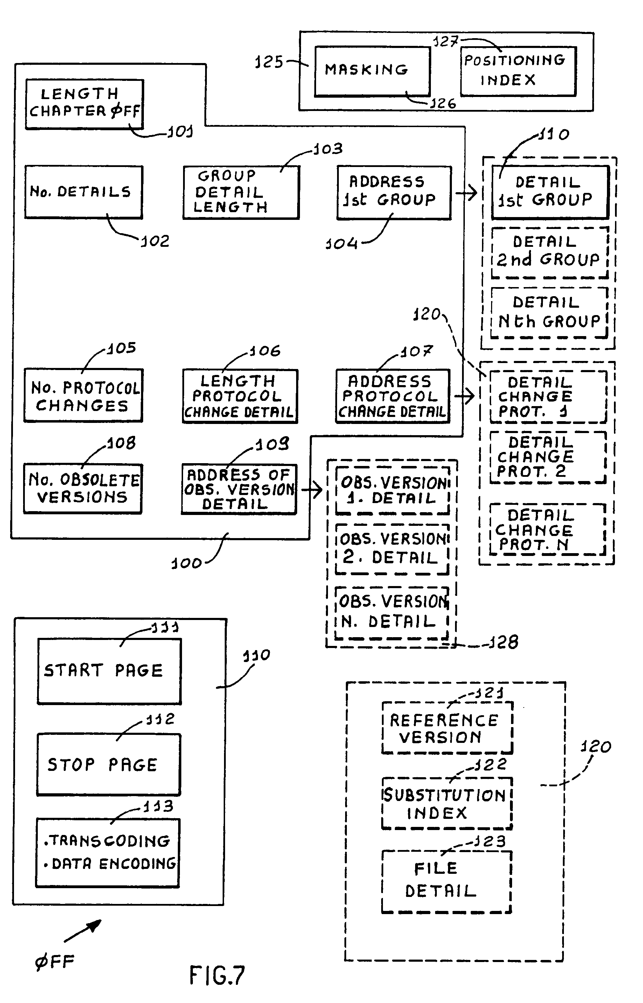

The items of information contained in the various sides of the chapter "0̸FF" (Figure 7), already identified, comprise the following:
a) General Data of Configuration 100 of the entire protocol;
b) Data of Details of Group 110 of the telesoftware chapters;
c) Optional Data of Modification of the Reception Program 120;
d) Optional Data of Details of Obsolete Versions.

In addition each side of the chapter "0̸FF" comprises data in respect of Check Parameters 125 relating to reception of the sides of the chapter "0̸FF". Those data are contained in the first three bytes of the side and will be described in detail hereinafter.

The chapter "0̸FF" is of a structure which is variable in dependence on the transmission requirements, as already described, but the data of point a) and the data of b) are always specified.

The parameters which are specified in typical situations of use may be transmitted in a single side with minimum loading of the transmission. The parameters are also formed by "bytes" and the positioning data are referred to the position in the side 0̸ of the chapter.

### a) General Configuration Data

The data 100 which configure the transmission protocol relate to characteristics which are independent from the "groups" and comprise, in the order of transmission and considering the first byte of the side as a position byte 0̸:
1) Two bytes 101, from position 3, which are indicative of the total length of the chapter "0̸FF",
2) One byte 102, in position 5, which is indicative of the number of details of groups of telesoftware chapters,
3) One byte 101, in position 6, which is indicative of the length of a telesoftware group detail: that item of data indicates the number of bytes of which each detail of the telesoftware chapter is composed,
4) Two bytes 104, from position 7, for defining the address of the detail of the first telesoftware group, which is indicative of the location from which the detailed list of the groups begins, with reference to the entire chapter 0̸FF,
5) One byte 105, in position 9, for defining the number of details of protocol exchange, which is indicative of the total number of variations in the reception program in the various versions,
6) One byte 106, in position 10, which is indicative of the length, in number of bytes, of a detail of protocol exchange,
7) Two bytes 107, from position 11, which are indicative of the address of the detail of the first protocol exchange,
8) A byte 108, in position 13, for defining the number of the obsolete versions, and
9) Two bytes 109, from position 14, for defining the address of the detail of the first obsolete version.

Other positions may also be dedicated to the detail of the operation of coding data.

### b) Group Detail Data

The chapters dedicated to transmission of files which belong to the same telesoftware group have the same transmission characteristics for them all to be recognized by the receiving system. The protocol makes it possible to define up to 255 different telesoftware groups. Each group detail 110 comprises the following parameters:
1) Two bytes 111, from position 15 of the side, "start page", which are indicative of the first chapter of the group dedicated to the telesoftware and in which the first chapter indicated is included in the group,
2) Two bytes 112, from position 17, "stop page", which specify the last chapter of the telesoftware group and in which the chapter indicated is included in the group,
3) One byte 113, position 19, "type of transcoding and auto-correction code", which specifies the group characteristics. That byte is subdivided into two portions in which:
   a) The portion which is made up of bits 0 and 1 of the byte contains the indication of the coding with which the files in the group are transmitted, as follows: 0̸,0̸, 8 bit transmission; 0̸,1, 7 bit transmission, with parity; 1,0̸, 7/8 bit transmission; and 1,1 3/4 bit transmission. A table of correspondence, in relation to the fifth transmission level, provides for transcoding of the data received by the receiving system from the system with which the transmissions take place, with 8 bit coding.
   b) The portion formed by bit 2 of the byte contains the indication of the type of data coding used in the transmission of the group, for generation of the check characters and possibly auto-correction characters. If the bit is "0̸", that indicates that the data coding is of the type with "auto-corrector code" and "character recognition code" (CRC) in respect of a line. If the bit is "1", that indicates that data coding is of the type with only line CRC.

### c) Reception Program Modification Data

In the protocol configuration phases the transmitting station 30 may broadcast programs which make it possible to modify the telesoftware reception program. The information on those modification programs are disposed in the configuration chapter "0̸FF" as assemblies of data 120 which specify each variation. Each assembly of data comprises the following parameters:
1) A byte 121 "reference version", for a digital value of between 0 and 255, to which there corresponds a particular telesoftware version. It serves to indicate to which program the transmitted modification refers. By way of example, two of those versions are respectively associated with a program MSX-Olivetti for home computers and a program for MS-DOS operating systems for personal computers.
2) A byte 122 "Substitution index", the value of which indicates which routine is to be replaced. If the value if set at 0̸FFH, that indicates that the entire reception program is to be replaced.
3) Three bytes 123, "File detail", which are indicative of the file in which the replacement program is contained. File transmission coding is compatible with that defined for the telesoftware group to which the file belongs.

The code transmitted in the specific file constitutes the modification to the program, that is to say it replaces either a routine of the program or the decoding program which is implemented on the receiving computer.

### d) Data of Details of Obsolete Versions

In case there are versions of telesoftware which are no longer supported by the transmitting system, in byte 108 of the general Configuration data 100, the number of the obsolete versions is greater than "0̸".

The versions which are no longer supported are specified by indicating them consecutively as blocks of data 128 from the allocation of the chapter which is indicated at byte 109 of the General Configuration Data 100.

### Check parameters

As already emphasised, the configuration chapter "0̸FF" is generally made up of a plurality of sides. For handling reception of that chapter, introduced at the beginning of each side of the chapter "0̸FF" are three bytes 125 in respect of check parameters, which are independent of the logic sequence of the above-described data and which contain items of information relating to the reception of the sides. Those parameters are formed by two portions:
1) One byte 126, at position 0̸, associated with a masking code, as will be described in relation to masking level 3, and
2) Two bytes 127, from position 1, associated with a positioning index of the side, of the type "i/n", in which "n" indicates the total number of sides in the chapter and "i" specifies the progressive index of the side. In particular the first side of the chapter is of a value 0̸ while the second side is of a value 1 and the last side is of a value n.

Figure 7 shows in graphic form the diagrammatic map of the parameters which make up the chapter "0̸FF". Illustrated therein by way of example are the obligatory parameters which are contained in the solid-line rectangles 100, 110 and 125 and the optional parameters 120 and 128 which are contained in the broken-line rectangles. Figure 7 also shows the correlation of some parameters.

### CODING OF THE FILE AND THE LINKS BETWEEN THE CHAPTERS

Coding of the file is effected at the seventh protocol level and concerns the actions performed by the receiving system in handling the assemblies of data received to extract a file. In particular the file is considered as being made up of the heading of the file and a part containing the data in the true sense.

### Structure of the heading of the file

The heading of the file is a data structure which contains information in respect of management of transmission of the file and an assembly of auxiliary data in respect of the transmitted file. Reception of the file heading is therefore necessary for acquisition of the file itself. The file heading may be positioned on any side of the chapter, with the following rules:
i) A single file heading may be specified for each side;
ii) It must be contained entirely on one side; and
iii) It is always arranged at the beginning of the side, immediately after the side heading.

The parameters relating to the file heading comprise fixed parameters and optional or variable parameters in which the fixed data are at predetermined positions within the file heading and the optional data, when such are present are arranged in the order in which they are defined.

In the following paragraphs, the positioning value indicates the position of the first byte of the portion in question. Numbering is effected relative to the file heading, considering the position of the first byte of the portion in question. Numbering is effected relative to the file heading, considering the position 0̸ as the first byte of the heading.

### Fixed parameters

The fixed part of the file heading is formed by five parameters of which four are formed by one byte and one by three bytes, which describe the significance of the data transmitted and the file structure.

In particular the parameters are in the following order of arrangement: 1) flags; 2) specification of the type of file; 3) number of data segments; 4) program start address; and 5) number of links:
1) Flags: by one bytes, each bit or "flag" of which is of the following significance:
   a) Autorun: when positioned at 1 it causes automatic run of the file received without intervention on the part of the operator.
   b) Autosave: when positioned at 1 it causes automatic save of the program on a mass carrier with the same name as that specified in the field "filename". It requires the "filename" to be specified.
   c) Overlay link: when positioned at 1 it indicates that specified is the optional parameter which specifies a file which constitutes an overlay of the file transmitted.
   d) Filename present: when positioned at 1 it indicates that there is included an optional parameter which specifies the name of the file transmitted.
   e) Comment: when positioned at 1 it indicates that the comment field is included.
   f) Presence of the access code: when that bit is positioned at 1 it indicates that a ciphered access code is specified and consequently level 8 of the protocol is activated.
   g) and h) Two bits which are not used.
2) File type specification, by one byte: this parameter specifies the type of file transmitted. At the present time, by way of example, among the 256 available codes, nine possible types of files have been defined, of which the first three types of files refer strictly to MSX machines and the last four types of files are dedicated to the MS-DOS operating system, as follows:
   1. Executable: the files contain a program written in machine code which can be executed under the MS-DOS operating system.
   2. Pre-interpreted Basic: the files contain a program which can be directly executed by the Extended Basic interpreter of the MSX operating system.
   3. Listing Basic: the files contain a Basic program in ASCII format which can be executed on the MSX operating system.
   4. Data: the files contain a written text which can be displayed directly.
   5. Text: the files contain a written program which can be displayed directly.
   6. Executable: the files contain a written program in machine code which can be executed under the MS-DOS operating system in EXE format.
   7. Pre-interpreted Basic: the files contain a program which can be directly executed by the GW Basic interpreter of the MS-DOS operating system.
   8. Listing Basic: the files contain a Basic program in ASCII format which can be executed with the GW Basic interpreter of the MS-DOS operating system.
   9. Executable: the files contain a program which is written in machine code which can be executed under the MS-DOS operating system, in COM format.

   The codes of the values from the 10th to the 255th have not been defined.
3) Number of data segments, by one byte: specifies the data segments into which the files is subdivided. The value may vary from 1 to 255.
4) Program begin address, by three bytes: indicates the address at which access is to be made to be able to execute the transmitted program. That parameter is significant only when the file contains a program.
5) Number of links, by one byte: specifies the number of chapters, besides that specified in the selection, into which the file has been subdivided.

The multi-byte numbers are numbers which can assume values on the decimal scale of higher than 255, in which the least significant byte of the number is specified as the first byte and the most significant byte is specified by the last.

### Variable parameters: data segment detail

The data segment detail is executed by means of two parameters:
a) Segment length, by three bytes: specifies the number of bytes making up the segment, and
b) Starting address, by three bytes: specifies the memory address in which the first byte of the segment is to be disposed. If the item of data transmitted is equal to the value 0̸FFFFFFH, the segment does not have a given allocation, that is to say the receiving computer may position the segment in any arbitrary memory location.

### Variable parameters: Link of a data block

The link parameter in respect of a data block is intended to specify all the parts into which the file being transmitted has been divided.

In general a file may be divided into an assembly of blocks which can be transmitted in different chapters. Associated with each block is a "link" (connection) parameter and therein the arrangement of the links is a matter of fundamental importance insofar as it establishes the logic sequence of linking together the various chapters in the reception phases.

The composition of a link comprises: 1) chapter detail; 2) side detail; and 3) number of sides of the data block.

The link parameter comprises a data structure of fixed length which is formed by three portions or fields for a total of 4 bytes which are in the following order:
1) Chapter number, by two bytes: indicates the chapter which contains the data block.
2) Number of the starting side, by one byte: indicates the side which contains the first data zone relating to the specified block.
3) Number of sides, by one byte: indicates how many sides have been used for transmission of the block. The data zones which are dedicated to the transmission of a block are arranged in contiguous sides, starting from the side specified in point 2).

### Variable parameters: overlay link

The aim of the overlay link is to specify a file used internally by the selected program.

The presence of this field is subordinate to the "Flag" c) of link overlay in the first byte of the fixed parameters. When that "Flag" is positioned at 1, the field is disposed immediately after the specification of the connected chapters and is formed by 4 bytes containing the detail of the overlay file with the code used for specifying the files in a chapter, which is defined as the number of the chapter, by three digits, and the fixed parameter of the file. When the link overlay parameter is specified, autosave and the filename of the fixed parameters also have to be specified.

### Variable parameters: filename detail

The filename specification field contains the name of the file to which the heading refers. The presence of that field is subordinate to the filename "Flag" d) of the fixed parameters. The first byte of the field specifies the length in the number "n" of bytes of the string. The name of the file immediately follows the byte relating to the length and occupies the "n" bytes specified in the first byte of the field.

The filename detail field is arranged immediately after the overlay link field.

### Variable parameters: comment

The comment field is reserved for the inclusion of a text forming a brief comment on the transmitted field. The presence of this field is subordinate to the comment "Flag" e) of the fixed parameters.

Similarly to the information specified in respect of the filename, the first byte of this field contains the length of the comment. The text forming the comment in the true sense immediately follows the length. The maximum length of a comment is thus 255 bytes.

The comment constitutes a field of generic use for which the use thereof depends from one application to another. In general it contains a text which is capable of being immediately displayed by the receiving system.

### Variable parameters: access check code

The access check code is formed by a single byte which indicates the type of access check with which the file has been transmitted. The heading of the file is transmitted in clear mode to permit recognition thereof while access to the data zones of the file is conditional upon the existence of a circuit or a program for deciphering purposes in the computer HC 43 or the computer PC 80.

Whenever the data zone is transmitted in clear mode and the access check code is specified, it is set at the value 0̸.

### SIDE CODE

The sixth level of the protocol relates to side coding and is used for interpretation of the data of a telesoftware side and for extraction of the data belonging to the file to be received.

Arranged in each telesoftware side may be a maximum number of bytes, the value of which is determined by the redundancy selected for detection/correction of errors (level 4) and by the type of transcoding (level 5).

Dissassembly of the file and assignation of the sides of transmission of level 6 is decided in the transmission phase while extraction of the data which accompany the file is completed in the reception phase.

Arranged in each side is a side heading code which begins with the first byte of the side and which comprises in the following order:
1) General data of the side heading;
2) Data for specifying the file heading (optional);
3) Data for specifying the first data group (optional); and
4) Data specifying the second data group (optional).

### General data of the side heading

The general data of the side heading are dedicated to managing the heading of the side and comprise the following three groups of items of information
1) Masking code, by one byte: memorizes a character containing a masking coding with which the side will be transmitted and the details of which are described in level 3 of the protocol;
2) Positioning index, by two bytes: represents the position of the side in the chapter. Coding by means of that index is of a structure i/n wherein "n" indicates the total number of sides in the chapter and "i" specifies the index of the side. Therefore the first side of the chapter is of a value "0̸", the second is "1", while the last is of the value "n". Since the values "i" and "n" are formed by one byte, it is possible to specify chapters with at a maximum 256 sides.
3) Specification of the content of the side heading, by one byte: it can indicate the presence of a file heading detail and up to two details in respect of data zones, which are independent of each other. Each data zone concerns the assembly of characters of the telesoftware side containing the data relating to a single file. The byte dedicated for that purpose has been divided into three portions or fields in which:
   a) Bit 6 relates to the file heading and specifies the presence of the file heading in the side when it is set to 1. That therefore indicates that the data for specifying the file heading are included in the side heading;
   b) Bits 3, 4 and 5 relate to a first data zone 1; and
   c) Bits 0, 1 and 2 relate to a second data zone 2.

The two fields relating to the data zones have a coding in which: "000" indicates that there is no data zone; "001" indicates that there is a single data zone in the chapter; "010" indicates that the data zone is the first data zone of the chapter; "011" indicates that the data zone is a central data zone of the chapter; and "100" indicates that the data zone is the last data zone of the chapter. The other codes are not defined.

### Data specifying the heading of the file

The data relating to specifying the heading of the file are optional and are included only when bit 6 of the byte 3) of the specification of the content of the heading of the side is positioned at 1. That system comprises data relating to:
a) "Extension", by one byte: specifies the extension of the file. The file is thus uniquely determined insofar as the chapter is that to which belongs the side in question and the extension is given by said parameter;
b) "Start", by one byte: indicates the address of the side where the heading of the file begins and immediately follows the side heading;
c) "Length", by two bytes: specifies the number of bytes which make up the heading of the file.

### Data specifying the data zones

The specifications of the data zones 1 and 2 are included when the field relating thereto, in the byte in respect of the specification of the content of the heading of the side, is different from "0̸". The structure of each data specification comprises:
a) "File specification", by three bytes: represents the indication of the specification of the telesoftware file obtained specifying chapter and extension. The code used is of the type: (No. of chapter) (extension) wherein (No.of chapter) means the number of the chapter formed by three hexadecimal digits, which contains the heading of the file; and (extension) corresponds to the fixed parameter of the heading of the file. In particular each byte comprises two digits. In the first byte the first digit is zero and is not used and the second digit is the most significant digit of the chapter index. In the second byte the two digits are respectively the central digit and the least significant digit of the index of the chapter. The third byte contains the extension of the heading of the file. In the specification of the chapter, each digit has a field from 0̸0̸ to 0̸F whereby it can be transmitted in the teletext system;
b) "Start", by two bytes: represents the starting address of the associated data zone;
c) "Length", by two bytes: represents the number of bytes which make up the data zone in the side in question;
d) "Pointer next search", by two bytes: specifies a chapter containing other sides with data zones belonging to the same file. The pointer is included in the transmission phase to facilitate the search for more chapters in the receiving phase. When the value of the pointer is greater than "800" in hexadecimal (2048 in decimal) that indicates that the next search pointer is not specified.

### DATA TRANSCODING

The firth level of the protocol concerns data transcoding and the aim thereof is to make it possible to use the protocol even in the situation where the receiving/transmitting system controls only a sub-assembly of the possible 256 configurations for each teletext character.

The aim of data transcoding is to modify the characters with an information content of 6 or 7 bits in bytes of 8 bits. The information relating thereto is contained in the two bits of the first field of the "group characteristic specifications" 3) of the group configuration data, as described above.

Recognition of the coding "00" of the two bits of the first field is indicative of the 8 bit transmission in which the transcoding level is transparent. Therefore no modification in respect of the data thereof is affected.

Recognition of the coding "01" indicates a 7 bit transmission in which the most significant bit of the character received contains the parity of the other 7 bits and in which therefore the character may vary only in the range of 0 - 127.

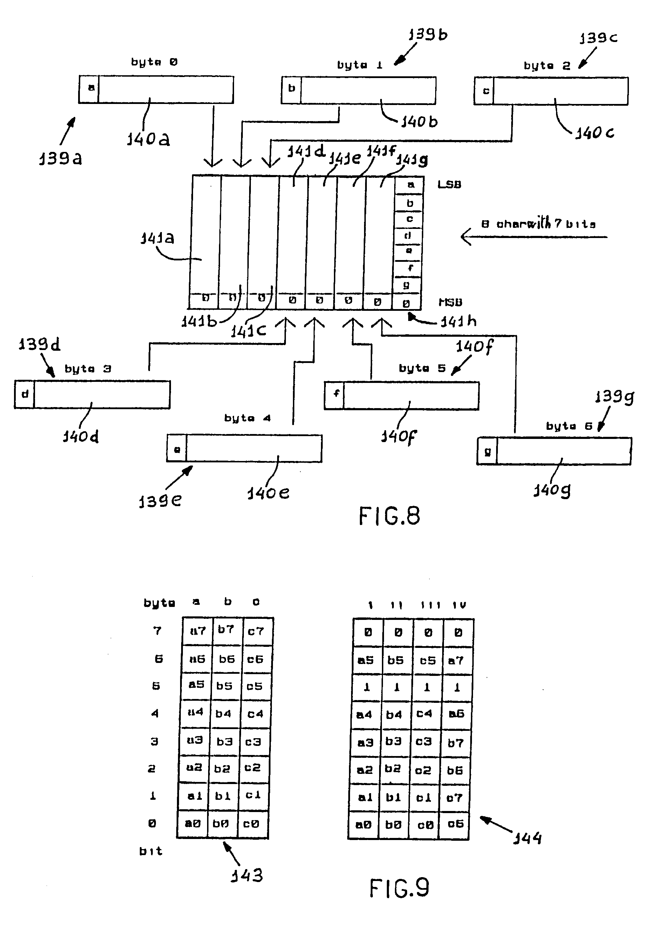

Recognition of the code "10" indicates a 7/8 bit transcoding in which there is a transmission with characters with 7 significant bits without the loss of information in passing from the 8 bits. In particular, with reference to Figure 8, 7/8 transcoding transforms the 8 bit characters into 7 bit characters, with the following rules:
- the 8 bit data are subdivided into groups of 7 bytes 139a - 139g;
- the least significant 7 bits 140a - 140g of the bytes remain unaltered;
- the 7 characters 141a - 141g which are formed in that way are the first 7 bit characters;
- the most significant 7 bits "a" - "g" of the bytes 139a - 139g of the group are combined in a character 141h, making the bit "a" relating to the first character 139a of the 8 bit group the least significant bit and the bit "g" relating to the seventh byte 139g the most significant bit. The character 141h which is made up in that way constitutes the eighth character of the 7 bit block.

The coding "11" relates to 3/4 transcoding which transforms 3 bytes into 4 characters without loss of information and without any output check character.

The description by way of example of the way in which the 3/4 transcoding operation is performed refers to Figure 9 in which a, b and c indicate the three bytes 143 and I, II, III, and IV indicate the four characters 144 resulting from the transcoding operation.

### DETECTION AND CORRECTION OF ERRORS

The fourth level of the protocol is occupied with the protection of the data, independently of the information content thereof.

Each telesoftware side is made up by the line 0̸ which is not used and which is not considered by the telesoftware protocol and the lines 1 to 23 of a teletext page. Each telesoftware line is made up of 40 bytes which can be used for supporting the teletext data.

For the purposes of broadcasting the telesoftware, the system according to the invention uses a part of the 40 valid bytes of a line for the transmission of the items of information and another part of the 40 bytes for detection and correction of the errors in the useful part.

As already emphasised in the chapter dedicated to Group Detail Data 110 (Figure 7), the system provides for two different types of transmission. The first type concerns transmission with auto-correction code and line CRC and the second type on the other hand concerns transmission with only line CRC. The two types of transmission are distinguished from each other insofar as the first permits a higher probability of correct reception on first acquisition while the second permits improved transmission efficiency, about 15% higher than that of the first type.

The polynomial generators of the CRC both of the first type and the second type are the same and depend only on the transcoding used. The only difference is that the CRC of the first type is calculated on 32 characters of data while that of the second type is calculated on 38 characters. The characteristic polynomials for calculation of the CRC are implemented by shirt registers and XOR obtained from suitable routines of the program for handling the telesoftware of the computer 43, 80.

In the case of data coding of the first type, with auto-correction, detection and correction of the errors is affected in two steps wherein, in a first step, the errors are corrected in accordance with a hamming code (40,34) and in a second step the residual errors are detected with a line CRC. When detecting residual errors, the line is rejected and acquisition has to be repeated a second time.

In the case of data coding of the second type, only detection of the residual errors is effected.

### Transmission with 8 useful bits

In transmission with eight useful bits, for the protection of data of the second type, that is to say without auto-correction, a 16 bit CRC is calculated on the first 38 bytes of the line; that provides assemblies of 40 bytes which constitute the specific telesoftware line of that type of transmission.

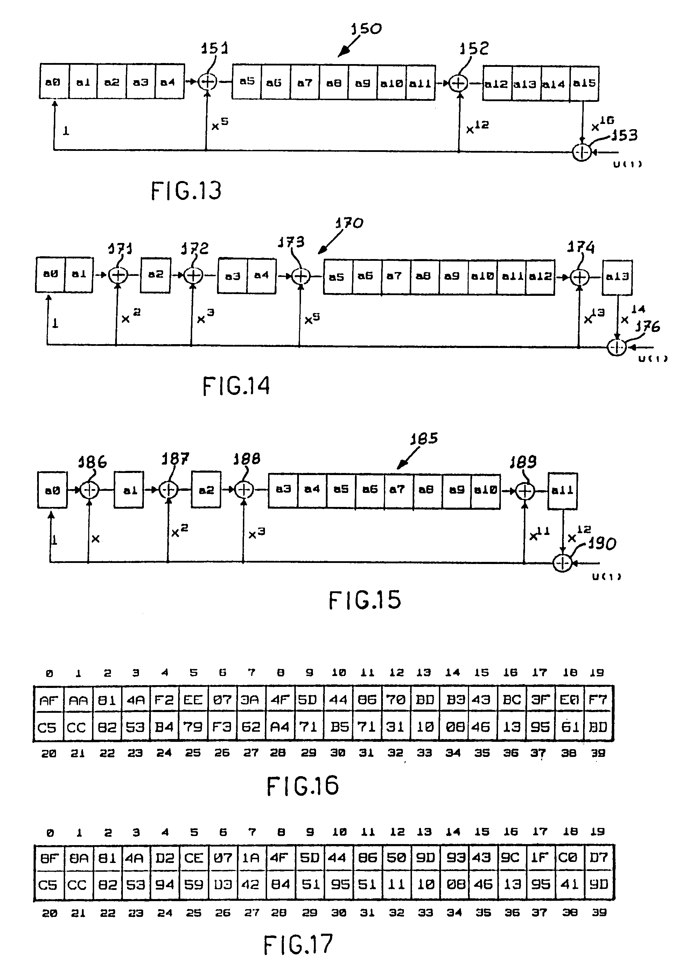

In particular and purely by way of example, the characteristic polynomial for calculation of the line CRCs is: "g(X)=1+X⁵+X¹²+X¹⁶" which is produced by a shift register 150 (Figure 13) which is subdivided into three sections, and three XOR 151, 152 and 153.

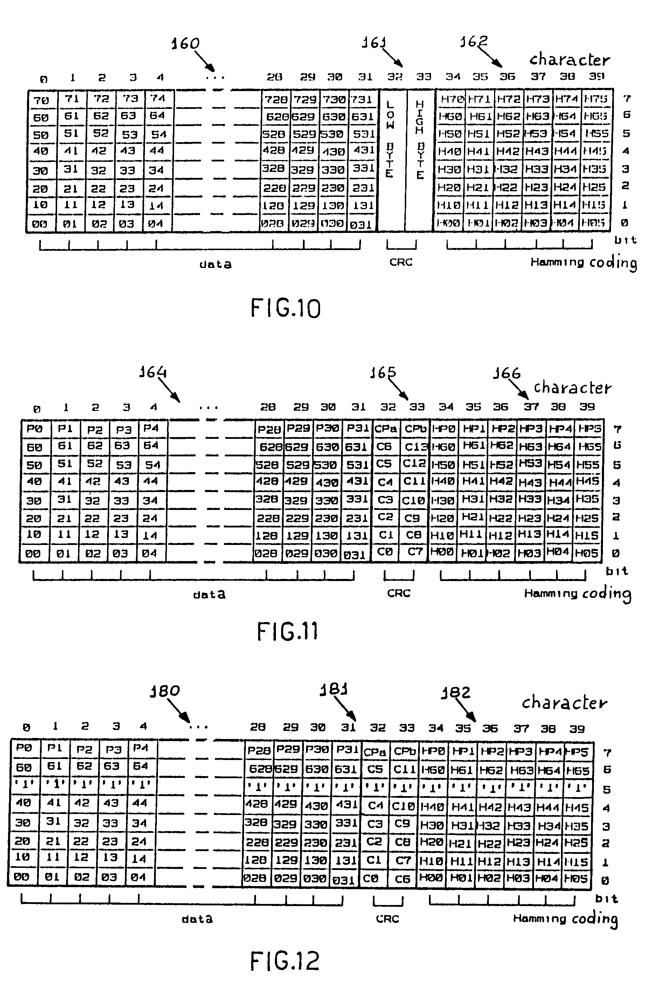

For protection for transmissions of the first type, that is to say with auto-correction, calculated on the first 32 bytes of data 160 (Figure 10) is a CRC 161 of 2 bytes and added to those bytes are 6 hamming redundancy butes 162. For that purpose the 34 bytes obtained from the data bytes 160 and the CRC 161 are subdivided into 8 block of which the first block is formed by the position bits "0", the second by the position bits "1", etc. Calculated on each block are 6 hamming redundancy bits, capable of correcting all the individual errors. In that way the 2 bytes of the CRC are also protected. The 32 bytes of data 160, the 2 bytes of CRC 161 and the 6 hamming redundancy bytes 162 constitute the 40 bytes of the telesoftware line for the 8 bit transmission with auto-correction.

The polynomial generator of the hamming code (40, 34) in shortened form is as follows: "g(X)=1+X+X⁶".

By means of that hamming block structure, any packets of errors are subdivided over a plurality of blocks, increasing the correction capacity.

Figure 10 shows the structure of a line of coded data in which the characters 160, 161 and 162 are set out in columns and are transmitted in succession from left to right from the bit 0̸0̸ to the bit H75. The hamming code blocks however are disposed horizontally. The least significant byte of the CRC is transmitted as a character 32 and the most significant as a character 33. The first number indicates the position of the bit (0-7) in the character; the last one or the last two numbers identify the characters within the data field (0-31) and the hamming redundancy field (0-5). Each hamming code block is thus identified by the same number which is preceded by the letter H when the bit is a hamming redundancy bit.

That structure makes it possible to have 3 separate fields in the line, with separate protection for the data: upon reception the side can be decoded by ignoring the separate forms of protection for the data, to use only the CRC or completely to exploit the possibility of correction and detection.

### 7 bit transmission (plus parity)

For protection of transmissions with 7 bits plus parity, with transcoding 7 and 7/8 and of the second type, that is to say without auto-correction, sub-division of the data is similar to that in respect of the 8 bit transmissions, replacing the bytes by the characters of 7 bits plus parity. The CRC is made up of 14 bits to which are added two parity bits to form two characters; it is calculated on the useful bits of the characters, excluding the parity checks.

For protecting transmissions involving 7 bits plus parity and transcoding 7 and 7/8 of the first type, that is to say with auto-correction, the structure of the line indicated in Figure 11 is similar to that shown in Figure 10, except for the most significant bits which contain the (odd) parity checks of the characters. In particular the structure of a data line comprises thirty two data characters 164, two CRC characters 165 and six hamming redundancy characters 166.

In the situation shown in Figure 11, the numbers preceded by the letter P indicate a parity check in respect of the character while those preceded by the letter C indicate a CRC. For example the bit indicated by HPO is the parity check in respect of the character H-O and not the hamming redundancy in respect of P0, P1, ..., P31.

In the case of the transmissions involving 7 bits (plus parity) and transcoding 7 and 7/8, with or without auto-correction, the 14 bit CRC is calculated on the data characters excluding the parity bits and is of the type: "g(X)=1+X²+X³+X⁵+X¹³+X¹⁴". That code is produced by a shift register 170 (see Figure 14) which is subdivided into four sections and by five XOR: 171, 172, 173, 174, 175 and 176.

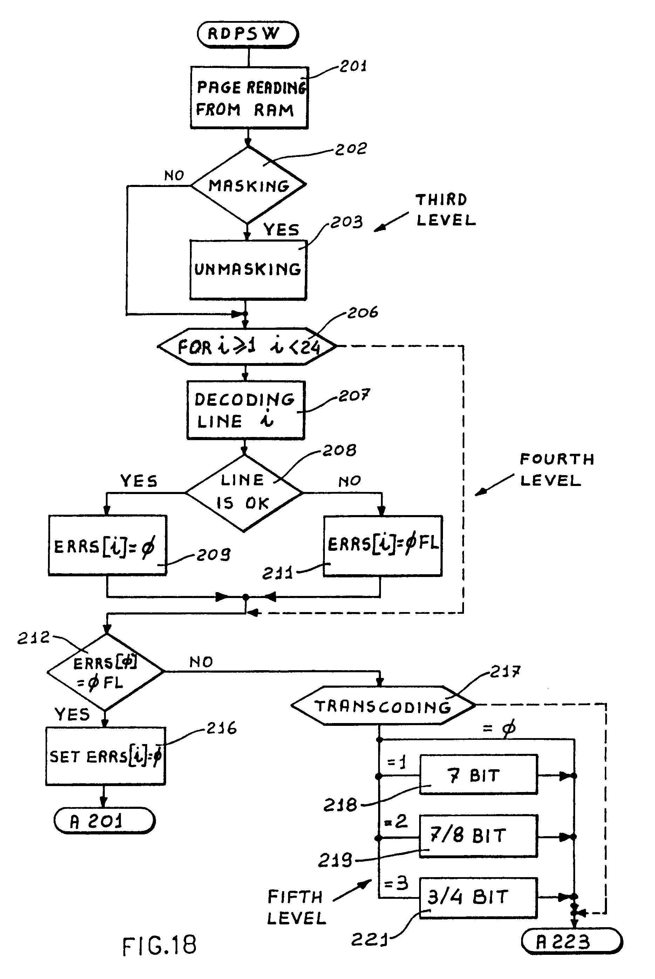

In the case of a transmission involving 7 bits (plus parity) and transcoding 3/4, the sub-division of the telesoftware lines is shown in Figure 12 with the criteria already referred to in connection with Figure 10. In this case also the telesoftware line comprises thirty two data characters 180, two CRC characters 181 and six hamming redundancy characters 182. The sub-division of lines differs from the sub-division of the lines of transcoding 7 and 7/8 only in regard to the position bit 5 which always assumes the value "1". The CRC is also formed by 12 bits since positions 7 and 5 cannot be used and is calculated on the data characters 180, excluding the parity bits and the position bits "5". It is of the type: "g(X)=1+X+X²+X³+X¹¹+X¹²" which is produced by a shift register 185 (see Figure 15) sub-divided into five sections, and five XOR 186, 187, 188, 189 and 190.

It is clear that the files of transmission and reception of data and programs comprise means for detecting errors and for auto-correction of the significant data cointained in a given sub-assembly of said blocks, for obtaining correct significant data; means for storing the correct data independently of the complete definition of the transmission parameters; means for decoding from said compatible data blocks of data belonging to one of said files, and means of taking the protocol for connection of a plurality of blocks of data constituting said file. This improves the time for receiving a correct file.

### MASKING

The third masking level provides for modulo-2 addition (XOR, bit by bit), to the content of each telesoftware line of a fixed sequence and the aim thereof is to improve the provisions of codes for protection from errors, in the presence of critical sequences. For that purpose, in successive re-transmissions of a telesoftware chapter, the same sides are transmitted with the same information content, once in clear mode and another time in a masked mode. That condition is stored in the first byte of each side (line 1, character 0̸), "masking code" of the sixth level, which is transmitted in the clear mode (without masking) and specifies in turn if the entire side is transmitted in the clear or the masked mode.

The summed sequence is of pseudo-casual type and is repeated in identical form in each line of the side. This implies that the files of data and programs are transmitted between the teletext pages in accordance with a specific telesoftware transmission procedure which provides for sending the files as an assembly of sides, in which each side contains informative codes of the files and check codes in respect of the informative codes and in which acceptance of the informative codes is conditional upon compatability of the check codes received with the check codes generated locally in response to the informative codes received. The informative codes of each side are re-transmitted by means of a masking operation such as to reduce the errors due to critical sequences of said informative codes and each side provides a predetermined location in which there is transmitted in clear mode a masking code representative of the transmission mode, respectively in the clear or the masked mode, with which said informative codes have been transmitted.

The masking has two effects. By means of individual acquisition of the masked side, the system reduces the frequency of multiple errors on the same hamming block due to identical critical byte sequences. By means of acquisition of the side in a clear mode and subsequently in a masked mode, that reduces the probability that the same line has repeatedly to be rejected because of critical sequences of errors.

### Specification of the masking code

The code which identifies the transmission in a clear mode is: "00100000". The code which identifies transmission with mask is: "01111111". Those codes have a hamming 6 spacing and thus permit correction of double errors. In addition those codes are also recognized in a transmission involving 7 bits and with transcoding 3/4. In particular decoding of the masking code is effected by ignoring the parity bit 7 and the bit 5 which is fixed at 1, with transcoding 3/4. If the code received has four or more "1", it is assumed that the page is in a clear mode.

The pseudo-casual sequence used for masking the line is generated by the polynomial: "g(X)=1+X⁵+X⁹", initializing the associated generation shift register (not shown) with the sequence 101010101.

For transcoding operations with 8, 7 and 7/8 bits, the sequence obtained is used without modifications. The mask of a line is indicated in Figure 16, in hexadecimal notation.

For transcoding 3/4 the bits in position "5" of each byte of the mask are forced to "0̸" so as to leave unchanged the "1" which characterise such a transcoding operation. The hexadecimal notation of the codes which constitute the mask is indicated in Figure 17.

The introduction of the mask influences the levels 4, 3 and 2. As regards level 4, the CRC and the hamming codes of the first line of the side are calculated by making the first byte (masking code) 20H.

As regards level 3, after possible masking of the side, the first byte is replaced by the masking code.

With transcoding involving 7 and 7/8 bits, the system uses the same masking as the 8 bit transcoding operation but the bits in position "7" are then replaced in level 2 by the parity checks in respect of the characters. With transcoding 3/4. the mask is transparent with respect to the bit 5 which is moved to 1 from the level 5 of the protocol; the bits "7" are replaced by the parity checks, from level 2.

In summary, the transmission and the reception of the files is organized at a plurality of increasing decoding levels comprising in succession:
1) masking means (level 3) for extracting from the teletext signals significant data which are free from errors;
2) means (level 4) for detecting errors and for auto-correction of the significant data contained in a given sub-assembly of said blocks, for obtaining correct significant data;
3) means (level 5) for transcoding of the correct significant data into data compatible with a predetermined coding;
4) means (level 6) for decoding from the predetermined coding of blocks of data belonging to one of said files,
5) means (level 7) for taking the protocol for connection of a plurality of blocks of data forming said file; and
6) optional means (level 8) for selective control of access to said file in accordance with a deciphering key.

This permits the transmission and reception of the telesoftware data and programs which are little affected by disturbances and have a high degree of flexibility.

The organization of transmission of reception also provides: masking of teletext sides and alternate transmission of the same informative content of a side alternately in clear and masked mode, and/or acquisition of sides in clear and masked mode; a code in clear mode in each side in clear mode or masked, in which there is coded an item of masking information relating to the clear or masking status of said side; in which acquisition of the data of said side is conditioned by said masking information; and in which the lines of said sides are provided with error recognition codes for error-free acceptance of the informative content of said side. This improves the reception of a file and reduces the probability of repeated rejection of a line of information.

### TELETEXT CODING

The second level of the transmission is common to the level of teletext coding which generally follows the standards for transmission of the UK - Teletext system specified if CCIR and adopted by RAI. That level however is also concerned with protection for the first five bytes of each teletext line with the related address and line information.

As regards the broadcasting of telesoftware, in the case of an 8 bit transmission the level 2 does not provide for calculation of the parity on the character. In the situation of using other transcoding operations, coding/decoding in respect of the data provides for calculation of an odd parity bit for each character, inserted as bit 7 in each character, irrespective of whether the character in question is in respect of data, CRC or hamming auto-correction.

### EXAMPLE OF PROGRAM LOADING

Referring to Figures 3, 18 and 19, loading of the telesoftware program in the memory of the receiving computer 80 provides for predisposition thereof by means of the loading program of the disk 89 under the control of its operating system, as described above. The loading program makes for management of the various levels of protocol of the telesoftware.

The acquisition of a telesoftware page RDPSW, levels three, four and five, is indicated in the flow chart shown in Figure 18 and involves an initial block 201 in which the data of the RAM 58 of the decoding unit 87 are read.

From the block 201 the system goes to the logic junction 202 in which the control unit of the computer 80 checks masking level three, checking the status of the character 0̸ in the first line of the side; the system then suitably proceeds with unmasking of the line in block 203 if the character 0̸ is indicative of masking.

The system then goes to management of level four which provides for acquisition only of data which are without error. In particular block 206 involves an increment from 1 to 23 for selective scanning of the lines 1-23. The system then goes to the block 207 in which the line i^{ma} is decoded and to the logic junction 208 for checking if the line has been correctly received in accordance with the rules for the detection of errors of the fourth level.

In the event of correct reception, the result of correct reception ERR(i) = 0̸ is stored at a Flag ERR(i), block 209. In the event of error, block 211 sets ERR(i) = 0̸FL. The system then goes to the junction 212 relating to the status of the flag ERR(0̸).

In the event that error status on the line 0̸ is found, all the 23 flags ERRS are positioned at error status in the block 216 and the system proceeds to read another page. The error status on the first line in fact prevents assimilation of the indications of which page has been received.

In the absence of error, the transcoding routines are carried out, block 217, and in the subsequent step, in the case involving 8 bit transmission, or in the subsequent transcoding operations involving 7 bits, block 218, 7/8 bits, block 219, or transcoding 3/4, in block 221, in accordance with the rules of the fifth level of the protocol.

It is clear that transmission and reception involve an error recognition code contained in each of the lines of the teletext pages which are associated with the files of data and programs. The receiver comprises means responsive to said error recognition code for detecting the errors in the individual line or in a group of lines of the teletext page for receiving in a second acquisition only the line with an error. This feature improves an easy and quick acquisition of the data and programs of the files. Moreover the receiver comprises means for decoding from the teletext signals blocks of data constituting sides of files, and, means for detecting the protocol for connection of a plurality of chapters constituting said file. This improves the reception of complex files.

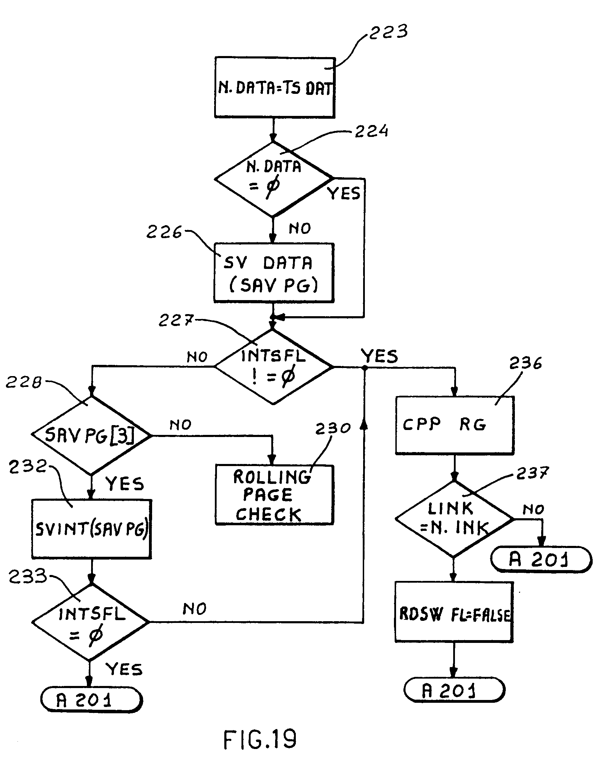

The system then goes to the higher levels shown in the diagram in Figure 19. In particular the block 223 involves identifying the data zones and thus, in the junction 224, the system proceeds to check that the data in the file received are different from zero and saves them in the memory of the computer, in the block 226.

Subsequently a check is made in the block 227 to ascertain if the heading of the file has been received. If not, the system in junction 228 checks whether the heading of the file is in the side received. If in that case also the reply turns out to be negative, the system proceeds to check the rolling pages, block 230, and returns to block 201.

If however the file heading is present in the side received, analysis of that heading is carried out in the block 232, in accordance with protocol level 6. The system then goes on in the junction 233 to check whether the heading of the file has been received completely. If not the system returns to block 201 to receive the missing item of data. If the file heading has been completely received, the system goes to the block 236 in which the received data are arranged in sequence. The system also goes to block 236 if reception of the file heading has already been verified at the junction 227.

After the block 236 the system goes on at the junction 237 to check that all the links have been executed. If not, the system returns to block 201 while it provides for loading of the saved data in the event that all the links have been completed.

It is also clear that the above described receiving apparatus comprises in the program of disc 89 for loading the telesoftware program means for access to the configuration chapter RD PSW, for taking, in a reception phase, the data configuration from the configuration chapter and configuring the receiving unit in accordance weith the telesoftware transmission procedure; and taking means for taking the telesoftware files from the teletext pages in accordance with the configuration of the receiving unit associated with the configuration data taken from the configuration chapter. This permits not to modify the program of disc 89 even if the procedure for the telesoftware transmission has been changed.

With reference to the section CONFIGURATION CHAPTER OF THE PROTOCOL, it is clear that in the system of transmission of the invention the files are transmitted in accordance with a telesoftware transmission procedure whose parameters are in turn transmitted in a configuration chaper (0̸FF) between the teletext pages as configuration data associated with the telesoftware transmission procedure; also the files with data and/or program are taken from the teletext pages in accordance with a telesoftware-taking procedure, wherein the configuration data thereof having been taken from said configuration chapter. This permits a high degree of flexibility in modifying the parameters and the procedure of transmission of data and programs.

## Claims

1. A method of transmitting or receiving through the air files (030-040) of data and/or programs in a teletext environment, in which a file is grouped in a plurality of teletext pages (36) to form a byte datastream for transmission or reception in accordance with a telesoftware transmission protocol which comprises a telesoftware-forming procedure for forming the file to be transmitted from a transmission apparatus and a telesoftware-taking procedure for receiving the file at a reception apparatus, characterised in that;
parameters of the transmission protocol form configuration data (100) associated with the telesoftware-forming procedure and the telesoftware-taking procedure and are grouped in a configuration chapter (0̸FF) disposed between teletext pages (36), the configuration chapter defining the byte datastream at the beginning of a transmission procedure, so that the parameters and the file can be received independently.

2. A method according to claim 1, in which the configuration chapter (0̸FF) comprises file specification data (120) associated with a selective modification of the transmission procedure and in which a step is provided to read the specification data and consequently modify the telesoftware-forming procedure and/or the telesoftware-taking procedure in accordance with the selective modification of the transmission protocol.

3. A method according to claim 1 or 2, in which the transmission and reception are organised at a plurality of rising decoding levels comprising in succession the following steps:
(a) masking the byte datastream for extracting blocks with data which are free from errors (level 3);
(b) detecting errors and auto-correcting the significant data contained in a given sub-assembly of the blocks, for obtaining corrected-significant data (level 4);
(c) transcoding the significant data into data compatible with a predetermined coding (level 5);
(d) decoding from the compatible predetermined coding blocks of data belonging to the file (level 6);
(e) taking a protocol for connection of a plurality of blocks of data forming the file (level 7); and
(f) selectively and optionally controlling access to the file in accordance with a deciphering key (level 8).

4. A method according to any preceding claim, in which the file grouped in a plurality of teletext pages (36) comprises error detection codes, the error detection codes being generated in each line of the teletext pages.

5. A method of receiving a file according to any preceding claim, comprising the following steps;
(a) detecting errors and auto-correcting significant data contained in a given sub-assembly of blocks, for obtaining corrected significant data;
(b) storing the significant data independently of the complete definition of the transmission parameters;
(c) decoding from the significant data blocks of data belonging to the file; and
(d) taking the protocol for connection of a plurality of blocks of data constituting the file.

6. A method according to any preceding claim, comprising the following steps;
(a) masking teletext sides and transmitting or acquiring sides having the same informative content alternately in clear mode and masked mode;
(b) providing or receiving a code in clear mode in each side in clear mode or masked mode, the code having coded therein an item of masking information relating to the clear or masked mode status of the side;
(c) forming or acquiring the data of the side as conditioned by the masking information; and
(d) providing the lines of the sides with error recognition codes, or checking the lines for the codes, for error-free acceptance of the informative content of the sides.

7. A method according to any preceding claim, comprising the following steps:
(a) decoding from the teletext signals blocks of data forming the sides of the file; and
(b) detecting the protocol for connection of a plurality of chapters constituting the file.

8. A method of transmitting a file according to any preceding claim comprising the following steps:
(a) transmitting the file between the teletext pages in accordance with a specific telesoftware transmission procedure in which the file is sent as an assembly of sides;
(b) providing that each side contains informative codes of the file and check codes in respect of the informative codes;
(c) making the acceptance of the informative codes conditional upon compatibility of the check codes received with check codes generated locally in response to the informative codes received;
(d) re-transmitting the informative codes of each side by means of a masking operation such as to reduce the errors due to critical sequences of the informative codes; and
(e) providing in each side a predetermined location in which a masking code representative of the transmission mode, in clear or masked mode, is transmitted in clear mode.

9. An apparatus for transmitting (30) or receiving (40) through the air files (030-040) with data and/or programs in a teletext environment, in which a file is grouped in a plurality of teletext pages (36) to form a byte datastream, characterised by:
formation means at the transmission apparatus (30) for forming a configuration chapter (0FF) containing configuration data associated with a protocol to be used for telesoftware transmission of the file and for transmitting the chapter as an assembly of one or more teletext pages or, respectively, by access means (RD PSW) at the reception apparatus (40) for accessing the configuration chapter and for taking the data from the configuration chapter and configuring the reception apparatus in accordance with the telesoftware transmission protocol; and
coding means at the transmission apparatus for coding the file in accordance with the telesoftware transmission protocol or, respectively, taking means (84) at the reception apparatus for taking the file, in accordance with the configuration data in the configuration chapter.

10. An apparatus for receiving according to claim 9, comprising;
masking means for extracting from the byte datastream blocks with data which are free from errors (level 3);
detecting means for detecting errors and for auto-correcting significant data contained in a given sub-assembly of the blocks, for obtaining corrected significant data (level 4);
transcoding means for transcoding the significant data into data compatible with a predetermined coding (level 5);
decoding means for decoding from the compatible data blocks of data belonging to the file (level 6);
taking means for taking the protocol for connection of a plurality of blocks of data forming the file (level 7); and
optional means for selectively controlling access to the file in accordance with a deciphering key.

11. An apparatus for receiving according to claim 9 or 10, for receiving transmissions in which the same informative content of a teletext side is alternately transmitted in clear and masked modes and a code is included with masking information relating to the clear or masked status of the side, comprising;
masking decoding means for acquiring sides in clear and masked modes, respectively;
taking means for taking the code in clear mode in each side in clear mode or masked mode; and
acquiring means for acquiring the data of the side as conditioned by the masking information.

## Patentansprüche

1. Verfahren zum Übertragen oder Empfangen von Dateien (030 bis 040) von Daten und/oder Programmen durch die Luft in einer Teletextumgebung, in welchem eine Datei in mehrere Teletextseiten (36) gruppiert wird, um einen Byte-Datenstrom zur Übertragung oder zum Empfang gemäß einem Telesoftware-Übertragungsprotokoll zu erzeugen, das eine Telesoftwareerzeugungs-Prozedur zum Erzeugen der von einem Übertragungsgerät zu übertragenden Daei und eine Telesoftware-Aufnahmeprozedur zum Empfangen der Datei an einem Empfangsgerät umfaßt,
**dadurch gekennzeichnet,**
daß Parameter des Übertragungsprotokolls Konfigurationsdaten (100) bilden, die mit der Telesoftwareerzeugungs-Prozedur und der Telesoftware-Aufnahmeprozedur verknüpft sind und in einem Konfigurationskapitel (0̸FF) gruppiert werden, das zwischen Teletextseiten (36) angeordnet wird, wobei das Konfigurationskapitel den Byte-Datenstrom am Beginn einer Übertragungsprozedur definiert, so daß die Parameter und die Datei unabhängig empfangen werden können.

2. Verfahren nach Anspruch 1, in welchem das Konfigurationskapitel (0̸FF) Dateispezifikationsdaten (120) umfaßt, die mit einer selektiven Modifikation der Übertragungsprozedur verknüpft sind, und in welchem ein Schritt zum Lesen der Spezifikationsdaten und zur konsequenten Modifikation der Telesoftware-Erzeugungsprozedur und/oder Telesoftware-Aufnahmeprozedur gemäß der selektiven Modifikation des Übertragungsprotokolls vorgesehen ist.

3. Verfahren nach Anspruch 1 oder 2, in welchem die Übertragung und der Empfang in mehreren ansteigenden Decodierebenen organisiert werden, welche in Folge die folgenden Schritte umfassen:
(a) Maskieren des Byte-Datenstroms zur Extraktion von Blöcken mit Daten, die frei von Fehlern sind (Ebene 3);
(b) Detektieren von Fehlern und automatisches Korrigieren der signifikanten Daten, die in einer gegebenen Teilassemblierung von Blöcken enthalten sind, um korrigierte signifikante Daten zu gewinnen (Ebene 4);
(c) Codeumwandlung der signifikanten Daten in mit einer vorbestimmten Codierung kompatible Daten (Ebene 5);
(d) Decodieren aus der kompatiblen vorbestimmten Codierung Datenblöcke, die zur Datei gehören (Ebene 6);
(e) Aufnehmen eines Protokolls zur Verbindung mehrerer die Datei bildender Datenblöcke (Ebene 7); und
(f) selektives und wahlweises Steuern des Zugriffs auf die Datei gemäß einem Dechiffrierschlüssel (Ebene 8).

4. Verfahren nach einem vorhergehenden Anspruch, in welchem die in mehrere Teletextseiten (36) grupperte Datei Fehlerdetektionscodes umfaßt, wobei die Fehlerdetektionscodes in jeder Zeile der Teletextseiten erzeugt werden.

5. Verfahren zum Empfang einer Datei gemäß einem vorhergehenden Anspruch, umfassend die folgenden Schritte:
(a) Detektieren von Fehlern und automatische Korrektur signifikanter Daten, die in einer gegebenen Subassemblierung von Blöcken enthalten sind, um korrigierte signifikante Daten zu gewinnen;
(b) Speichern der signifikanten Daten unabhängig von der vollständigen Definition der Übertragungsparameter;
(c) Decodieren von Datenblöcken, die zur Datei gehören, aus den signifikanten Daten; und
(d) Aufnehmen des Protokolls zur Verbindung mehrerer die Datei bildender Datenblöcke.

6. Verfahren nach einem vorhergehenden Anspruch, umfassend die folgenden Schritte:
(a) Maskieren von Teletextseiten und Übertragen oder Erfassen von Seiten, die denselben Informationsgehalt aufweisen, Wechselweise in einem Klartextmodus und einem maskierten Modus;
(b) Vorsehen oder Empfangen eines Codes im Klartextmodus in jeder Seite im Klartextmodus oder maskierten Modus, wobei der Code ein darin codiertes Maskeninformationselement umfaßt, das sich auf den Klartextmodusstatus oder Maskenmodusstatus der Seite bezieht;
(c) Erzeugen oder Erfassen der Daten der Seite, wie sie durch die Maskierungsinformation konditioniert ist; und
(d) Versehen der Zeilen der Seiten mit Fehlererkennungscodes oder Überprüfen der Zeilen nach den Codes zur fehlerfreien Akzeptanz des Informationsinhalts der Seiten.

7. Verfahren nach einem vorhergehenden Anspruch, aufweisend die folgenden Schritte:
(a) Decodieren der Datenblöcke, die die Seiten der Datei bilden, aus den Teletextsignalen; und
(b) Detektieren des Protokolls zur Verbindung einer Mehrzahl von Kapiteln, die die Datei bilden.

8. Verfahren zum Übertragen einer Datei gemäß einem vorhergehenden Anspruch, aufweisend die folgenden Schritte:
(a) Übertragen der Datei zwischen den Teletextseiten gemäß einer spezifischen Telesoftware-Übertragungsprozedur, in der die Datei als eine Assemblierung von Seiten gesendet wird;
(b) Vorsehen, daß jede Seite Informationscodes der Datei und Prüfcodes bezüglich der Informationscodes enthält,
(c) Abhängigmachen der Akzeptanz der Informationscodes von der Kompatibilität von Prüfcodes, die mit lokal erzeugten Prüfcodes empfangen werden, abhängig von den empfangenen Informationscodes;
(d) Rückübertragung der Informationscodes jeder Seite mittels eines Maskierungsvorgangs derart, um die Fehler infolge kritischer Sequenzen von Informationscodes zu reduzieren; und
(e) Vorsehen auf jeder Seite einer vorbestimmten Stelle, in der ein für den Übertragungsmodus im Klartext- oder Maskenmodus repräsentativer Maskierungscode im Klar-Modus übertragen wird.

9. Gerät zum Übertragen (30) oder Empfangen (40) von Dateien (030 bis 040) mit Daten und/oder Programmen durch die Luft in einer Teletextumgebung, in welchem eine Datei in mehrere Teletextseiten (36) gruppiert ist, um einen Byte-Datenstrom zubilden,
**gekennzeichnet durch:**
eine Bildungseinrichtung im Übertragungsgerät (30) zum Bilden eines Konfigurationskapitels (0̸FF), das Konfigurationsdaten verknüpft mit einem Protokoll enthält, das zur Telesoftware-Übertragung der Datei und zum Übertragen des Kapitels als eine Assemblierung einer oder mehrerer Teletextseiten zu verwenden ist, oder jeweilig durch eine Zugriffseinrichtung (RD PSW) im Empfangsgerät (40) zum Zugreifen auf das Konfigurationskapitel und zur Entnahme der Daten aus dem Konfigurationskapitel und Konfiguration des Empfangsgeräts gemäß dem Telesoftware-Übertragungsprotokoll; und
eine Codiereinrichtung im Übertragungsgerät zum Codieren der Datei gemäß des Telesoftware-Übertragungsprotokolls oder jeweilig eine Aufnahmeeinrichtung (84) am Empfangsgerät zur Aufnahme der Datei gemäß den Konfigurationsdaten im Konfigurationskapitel.

10. Gerät zum Empfang nach Anspruch 9, aufweisend:
eine Maskierungseinrichtung zur Extraktion aus dem Bytedatenstrom Blöcke mit Daten, die frei von Fehlern sind (Ebene 3);
eine Detektionseinrichtung zur Detektion von Fehlern und zur automatischen Korrektur signifikanter Daten, die in einer gegebenen Teilassemblierung der Blöcke enthalten sind, zur Gewinnung korrigierter signifikanter Daten (Ebene 4);
eine Code-Umwandlungseinrichtung zur Code-Umwandlung der signifikanten Daten in mit einer vorbestimmten Codierung kompatible Daten (Ebene 5);
eine Decodiereinrichtung zum Decodieren der kompatiblen Datenblöcke von zur Datei gehörenden Daten (Ebene 6);
eine Aufnahmeeinrichtung zur Aufnahme des Protokolls zur Verbindung mehrerer die Datei bildender Datenblöcke (Ebene 7); und
eine Optionseinrichtung zur selektiven Steuerung des Zugriffs auf die Datei gemäß eines Dechiffrierschlüssels.

11. Gerät zum Empfang nach Anspruch 9 oder 10 zum Empfangen von Übertragungen, in denen derselbe Informationsgehalt einer Teletextseite wechselweise in einem Klartext- und maskierten Modus übertragen wird und ein Code mit Maskierungsinformation eingeschlossen ist, die sich auf den Klar- oder Maskenstatus der Seite bezieht, aufweisend:
eine Maskierungsdecodiereinrichtung zur Erfassung von Seiten im Klartext- bzw. Maskierungsmodus;
eine Aufnahmeeinrichtung zur Aufnahme des Codes im Klartextmodus in jeder Seite im Klartextmodus oder Maskenmodus; und
eine Erfassungseinrichtung zum Erfassen der Daten der Seite gemäß Konditionierung durch die Maskierungsinformation.

## Revendications

1. Procédé de transmission ou de réception par voie aérienne de fichiers (030-040) de données et/ou de programmes dans un environnement de télétexte, dans lequel un fichier est regroupé dans plusieurs pages de télétexte (36), afin de constituer un courant de données par octets pour la transmission ou la réception, selon un protocole de transmission de télé-logiciel, qui comprend une procédure de constitution de télé-logiciel, pour constituer le fichier à transmettre depuis un appareil de transmission, et une procédure d'extraction de télé-logiciel, pour recevoir le fichier sur un appareil de réception, caractérisé en ce que:
les paramètres du protocole de transmission constituent des données de configuration (100) associées à la procédure de constitution de télé-logiciel et à la procédure d'extraction de télé-logiciel, et sont regroupés dans un groupe de configuration (0̸FF) situé entre les pages de télétexte (36), le groupe de configuration définissant le courant de données par octets au début d'une procédure de transmission, de façon que les paramètres et le fichier puissent être reçus indépendamment.

2. Procédé selon la revendication 1, dans lequel le groupe de configuration (0̸FF) comprend des données de spécification de fichiers (120) associées à une modification sélective de la procédure de transmission, et dans lequel une étape est prévue pour lire les données de spécification et modifier en conséquence la procédure de constitution de télé-logiciel et/ou la procédure d'extraction de télé-logiciel, selon la modification sélective de la procédure de transmission.

3. Procédé selon la revendication 1 ou 2, dans lequel la transmission et la réception sont organisées en plusieurs niveaux croissants de décodage comprenant successivement les étapes suivantes:
(a) masquage du courant de données par octets pour extraire des blocs, les données qui sont exemptes d'erreurs (niveau 3);
(b) détection des erreurs et correction automatique des données importantes contenues dans un sous-ensemble donné des blocs, pour obtenir des données importantes corrigées (niveau 4);
(c) transcodage des données importantes en données compatibles avec un codage prédéterminé (niveau 5);
(d) décodage d'après les blocs de codage prédéterminé compatibles, des données appartenant au fichier (niveau 6);
(e) extraction d'un protocole pour la connexion de plusieurs blocs de données constituant le fichier (niveau 7); et
(f) contrôle sélectif et optionnel de l'accès au fichier selon une clé de déchiffrage (niveau 8).

4. Procédé selon l'une quelconque des revendications précédentes, dans lequel les fichiers regroupés dans plusieurs pages de télétexte (36) comprennent des codes de détection d'erreur, les codes de détection d'erreur étant générés dans chaque ligne des pages de télétexte.

5. Procédé de réception d'un fichier selon l'une quelconque des revendications précédentes, comprenant les étapes suivantes:
(a) détection des erreurs et correction automatique des données importantes contenues dans un sous-ensemble donné de blocs, pour obtenir des données importantes corrigées;
(b) stockage des données importantes indépendamment de la définition complète des paramètres de transmission;
(c) décodage d'après les blocs de données importantes, des données appartenant au fichier;
(d) extraction du protocole pour la connexion de plusieurs blocs de données constituant le fichier.

6. Procédé selon l'une quelconque des revendications précédentes, comprenant les étapes suivantes:
(a) masquage des côtés du télétexte et transmission ou acquisition des côtés ayant le même contenu d'information, alternativement en mode clair et en mode masqué;
(b) fourniture ou réception d'un code en mode clair dans chaque côté, en mode clair ou en mode masqué, le code comportant codé dans celui-ci, un élément d'information de masquage concernant l'état de mode clair ou masqué du côté;
(c) formation ou acquisition des données du côté, telles qu'elles sont conditionnées par l'information de masquage; et
(d) fourniture aux lignes des côtés de codes de reconnaissance d'erreur, ou vérification des codes dans les lignes, pour l'acceptation sans erreur du contenu d'informations des côtés.

7. Procédé selon l'une quelconque des revendications précédentes, comprenant les étapes suivantes:
(a) décodage d'après les signaux de télétexte des blocs de données constituant les côtés du fichier; et
(b) détection du protocole pour la connexion de plusieurs groupes constituant le fichier.

8. Procédé de transmission d'un fichier selon l'une quelconque des revendications précédentes, comprenant les étapes suivantes:
(a) transmission du fichier entre les pages de télétexte selon une procédure spécifique de transmission de télé-logiciel dans laquelle le fichier est envoyé en un assemblage de côtés;
(b) fourniture de ce que chaque côté contient des codes d'informations du fichier et des codes de vérification concernant les codes d'informations;
(c) acceptation conditionnelle des codes d'informations en cas de compatibilité des codes de vérification reçus avec les codes de vérification générés localement en réponse aux codes d'informations reçus;
(d) retransmission des codes d'informations de chaque côté au moyen d'une opération de masquage, de façon à diminuer les erreurs dues aux séquences critiques des codes d'information; et
(e) fourniture dans chaque côté d'un emplacement prédéterminé dans lequel un code de masquage représentant le mode de transmission, en mode clair ou masqué, est transmis en mode clair.

9. Appareil pour transmettre (30) ou recevoir (40) par voie aérienne des fichiers (030-040) avec des données et/ou des programmes dans un environnement de télétexte, dans lequel un fichier est regroupé en plusieurs pages de télétexte (36), afin de constituer un courant de données par octets caractérisé par:
des moyens de constitution sur l'appareil de transmission (30), pour constituer un groupe de configuration (OFF) contenant des données de configuration associées à un protocole à utiliser pour la transmission par télé-logiciel du fichier, et pour transmettre le groupe en un assemblage d'une ou de plusieurs pages de télétexte ou, respectivement, par des moyens d'accès (RD PSW) sur l'appareil de réception (40), pour accéder au groupe de configuration et pour extraire les données provenant du groupe de configuration, et configurer l'appareil de réception selon le protocole de transmission de télé-logiciel; et
des moyens de codage sur l'appareil de transmission, pour coder le fichier selon le protocole de transmission de télé-logiciel ou, respectivement, des moyens d'extraction (84) sur l'appareil de réception pour extraire le fichier, selon les données de configuration situées dans le groupe de configuration.

10. Appareil de réception selon la revendication 9, comprenant:
des moyens de masquage pour extraire des blocs du courant de données par octets, les données qui sont exemptes d'erreurs (niveau 3);
des moyens de détection pour détecter les erreurs et pour corriger automatiquement les données importantes contenues dans un sous-ensemble donné des blocs, pour obtenir des données importantes corrigées (niveau 4);
des moyens de transcodage pour transcoder les données importantes en données compatibles avec un codage prédéterminé (niveau 5);
des moyens de décodage pour décoder des blocs de données compatibles, les données appartenant au fichier (niveau 6);
des moyens d'extraction pour extraire le protocole pour la connexion de plusieurs blocs de données constituant le fichier (niveau 7); et
des moyens optionnels pour contrôler de façon sélective l'accès au fichier selon une clé de déchiffrage.

11. Appareil de réception selon la revendication 9 ou 10, pour recevoir des transmissions dans lesquelles le même contenu d'information d'un côté de télétexte est transmis alternativement en mode clair et en mode masqué, et un code est inclus avec des informations de masquage concernant l'état clair ou masqué du côté, comprenant:
des moyens de décodage de masquage pour acquérir respectivement les côtés en modes clair et masqué;
des moyens d'extraction pour extraire le code en mode clair dans chaque côté en mode clair ou en mode masqué; et
des moyens d'acquisition pour acquérir les données du côté telles qu'elles sont conditionnées par l'information de masquage.
